# EUROPEAN PATENT SPECIFICATION

(11) **EP 4 277 411 B1**
(45) Date of publication and mention of the grant of the patent: **24.12.2025**
(21) Application number: 22736881.8
(22) Date of filing: 07.01.2022
(51) Int. Cl.: H04L 1/18, H04W 72/12, H04W 76/28, H04W 4/40, H04W 92/18

(54) **METHOD AND DEVICE FOR PRIORITIZING HARQ FEEDBACK IN NR V2X**
VERFAHREN UND VORRICHTUNG ZUR PRIORISIERUNG VON HARQ-RÜCKKOPPLUNG IN NR V2X
PROCÉDÉ ET DISPOSITIF POUR PRIORISER UNE RÉTROACTION HARQ DANS UN SYSTÈME NR V2X

(30) Priority: 11.01.2021 KR 20210003389; 11.01.2021 KR 20210003543
(43) Date of publication of application: 15.11.2023
(73) Proprietor: LG Electronics Inc., Yeongdeungpo-gu Seoul 07336 (KR)
(72) Inventor: PARK, Giwon, Seoul 06772 (KR); SEO, Hanbyul, Seoul 06772 (KR); LEE, Seungmin, Seoul 06772 (KR)
(74) Representative: Mooser, Sebastian Thomas
(86) International application number: PCT/KR2022/000294
(87) International publication number: WO 2022/149904

(56) References cited:
- WO-A1-2020/218892
- US-A1- 2019 053 250
- US-A1- 2020 266 857
- ANONYMOUS: "3rd Generation Partnership Project; Technical Specification Group Radio Access Network; NR; Medium Access Control (MAC) protocol specification (Release 16)", 3GPP STANDARD; TECHNICAL SPECIFICATION; 3GPP TS 38.321, vol. RAN WG2, no. V16.3.0, 6 January 2021 (2021-01-06), pages 1 - 156, XP051999701
- LG ELECTRONICS: "Discussion on physical layer procedures for NR sidelink", 3GPP DRAFT; R1-2003566, vol. RAN WG1, 16 May 2020 (2020-05-16), pages 1 - 22, XP051885347
- QUALCOMM INCORPORATED: "Considerations on Physical Layer aspects of NR V2X", 3GPP DRAFT; R1-2004756, vol. RAN WG1, 28 May 2020 (2020-05-28), pages 1 - 22, XP051892050
- HUAWEI, HISILICON: "Remaining details of physical layer procedures for sidelink", 3GPP DRAFT; R1-2001555, vol. RAN WG1, 11 April 2020 (2020-04-11), pages 1 - 17, XP051875146

## Description

### TECHNICAL FIELD

This disclosure relates to a wireless communication system.

### BACKGROUND ART

Sidelink (SL) communication is a communication scheme in which a direct link is established between User Equipments (UEs) and the UEs exchange voice and data directly with each other without intervention of an evolved Node B (eNB). SL communication is under consideration as a solution to the overhead of an eNB caused by rapidly increasing data traffic. Vehicle-to-everything (V2X) refers to a communication technology through which a vehicle exchanges information with another vehicle, a pedestrian, an object having an infrastructure (or infra) established therein, and so on. The V2X may be divided into 4 types, such as vehicle-to-vehicle (V2V), vehicle-to-infrastructure (V2I), vehicle-to-network (V2N), and vehicle-to-pedestrian (V2P). The V2X communication may be provided via a PC5 interface and/or Uu interface.

Meanwhile, as a wider range of communication devices require larger communication capacities, the need for mobile broadband communication that is more enhanced than the existing Radio Access Technology (RAT) is rising. Accordingly, discussions are made on services and user equipment (UE) that are sensitive to reliability and latency. And, a next generation radio access technology that is based on the enhanced mobile broadband communication, massive Machine Type Communication (MTC), Ultra-Reliable and Low Latency Communication (URLLC), and so on, may be referred to as a new radio access technology (RAT) or new radio (NR). Herein, the NR may also support vehicle-to-everything (V2X) communication. WO2020/218892 A1 teaches determination of transmission timing of HARQ-ACK information in Sidelink. US2020/266857 A1 teaches transmission of feedback information in Sidelink on PUCCH and determination of timing thereof.

### DISCLOSURE

### TECHNICAL PROBLEM

Meanwhile, an RX UE may drop physical sidelink feedback channel (PSFCH) transmission based on the UL/SL prioritization procedure or the SL/SL prioritization procedure. In this case, when performing the negative acknowledgement (NACK)-only based hybrid automatic repeat request (HARQ) feedback operation, the TX UE may determine that the RX UE has successfully decoded data, and the TX UE may not perform retransmission of the data. Specifically, for example, if the cast type indicator included in the SCI format 2-A is set to 11, and the HARQ feedback enabled/disabled indicator included in the SCI format 2-A is set to HARQ feedback enabled, the TX UE that has not received a PSFCH may determine that the RX UE has successfully decoded data, and the TX UE may not perform retransmission of the data. For example, if the HARQ feedback enabled/disabled indicator included in the SCI format 2-B is set to HARQ feedback enabled, the TX UE that has not received a PSFCH may determine that the RX UE has successfully decoded data, and the TX UE may not perform retransmission of the data. This may lead to transmission failure for the RX UE.

### TECHNICAL SOLUTION

In an embodiment, provided is a method for performing wireless communication by a first device. The method may comprise: obtaining information related to a set of resource blocks (RBs) for physical sidelink feedback channel (PSFCH) transmission; receiving, from a second device through a physical sidelink control channel (PSCCH), first sidelink control information (SCI) for scheduling of a physical sidelink shared channel (PSSCH) and second SCI; receiving, from the second device through the PSSCH, the second SCI including a source ID of the second device and a medium access control (MAC) protocol data unit (PDU), wherein the first SCI or the second SCI includes information related to a remaining PDB of the MAC PDU; generating negative acknowledgment (NACK) information based on a failure of decoding of the MAC PDU; allocating at least one RB among the set of RBs to the PSSCH; determining an index of a PSFCH resource for PSFCH transmission among the at least one RB, based on the source ID of the second device; determining a priority of the NACK information as a highest priority based on that the remaining PDB is less than or equal to a threshold; and transmitting, to the second device, the NACK information based on the PSFCH resource.

In an embodiment, provided is a first device adapted to perform wireless communication. The first device may comprise: one or more memories storing instructions; one or more transceivers; and one or more processors connected to the one or more memories and the one or more transceivers. For example, the one or more processors may execute the instructions to: obtain information related to a set of resource blocks (RBs) for physical sidelink feedback channel (PSFCH) transmission; receive, from a second device through a physical sidelink control channel (PSCCH), first sidelink control information (SCI) for scheduling of a physical sidelink shared channel (PSSCH) and second SCI; receive, from the second device through the PSSCH, the second SCI including a source ID of the second device and a medium access control (MAC) protocol data unit (PDU), wherein the first SCI or the second SCI includes information related to a remaining PDB of the MAC PDU; generate negative acknowledgment (NACK) information based on a failure of decoding of the MAC PDU; allocate at least one RB among the set of RBs to the PSSCH; determine an index of a PSFCH resource for PSFCH transmission among the at least one RB, based on the source ID of the second device; determine a priority of the NACK information as a highest priority based on that the remaining PDB is less than or equal to a threshold; and transmit, to the second device, the NACK information based on the PSFCH resource.

### ADVANTAGEOUS EFFECTS

Reliability of SL communication can be secured.

### BRIEF DESCRIPTION OF THE DRAWINGS

FIG. 1 shows a structure of an NR system, based on an embodiment of the present disclosure.
FIG. 2 shows a radio protocol architecture, based on an embodiment of the present disclosure.
FIG. 3 shows a structure of a radio frame of an NR, based on an embodiment of the present disclosure.
FIG. 4 shows a structure of a slot of an NR frame, based on an embodiment of the present disclosure.
FIG. 5 shows an example of a BWP, based on an embodiment of the present disclosure.
FIG. 6 shows a procedure of performing V2X or SL communication by a UE based on a transmission mode, based on an embodiment of the present disclosure.
FIG. 7 shows three cast types, based on an embodiment of the present disclosure.
FIG. 8 is a drawing for explaining a problem according to the prior art.
FIG. 9 shows a procedure for an RX UE to transmit prioritized HARQ feedback, based on an embodiment of the present disclosure.
FIG. 10 shows a procedure for the RX UE to transmit prioritized HARQ feedback, based on an embodiment of the present disclosure.
FIG. 11 shows a method for a first device to perform wireless communication, based on an embodiment of the present disclosure.
FIG. 12 shows a method for a second device to perform wireless communication, based on an embodiment of the present disclosure.
FIG. 13 shows a communication system 1, based on an embodiment of the present disclosure.
FIG. 14 shows wireless devices, based on an embodiment of the present disclosure.
FIG. 15 shows a signal process circuit for a transmission signal, based on an embodiment of the present disclosure.
FIG. 16 shows another example of a wireless device, based on an embodiment of the present disclosure.
FIG. 17 shows a hand-held device, based on an embodiment of the present disclosure.
FIG. 18 shows a vehicle or an autonomous vehicle, based on an embodiment of the present disclosure.

### MODE FOR INVENTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH" and "PDCCH" may be proposed as an example of the "control information". In addition, when indicated as "control information (i.e., PDCCH)", it may also mean that "PDCCH" is proposed as an example of the "control information".

In the following description, 'when, if, or in case of' may be replaced with 'based on'.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

5G NR is a successive technology of LTE-A corresponding to a new Clean-slate type mobile communication system having the characteristics of high performance, low latency, high availability, and so on. 5G NR may use resources of all spectrum available for usage including low frequency bands of less than 1GHz, middle frequency bands ranging from 1GHz to 10GHz, high frequency (millimeter waves) of 24GHz or more, and so on.

For clarity in the description, the following description will mostly focus on 5G NR. However, technical features according to an embodiment of the present disclosure will not be limited only to this.

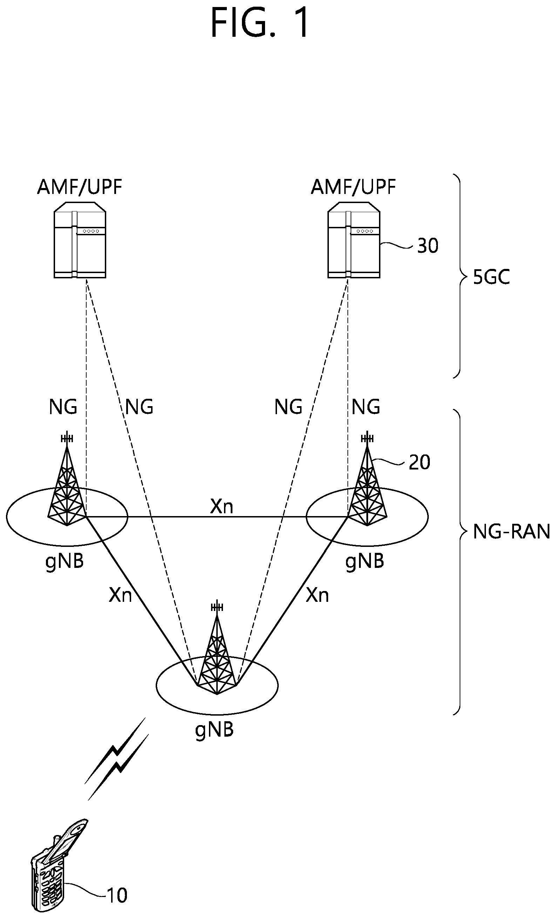

FIG. 1 shows a structure of an NR system, based on an embodiment of the present disclosure. The embodiment of FIG. 1 may be combined with various embodiments of the present disclosure.

Referring to FIG. 1, a next generation-radio access network (NG-RAN) may include a BS 20 providing a UE 10 with a user plane and control plane protocol termination. For example, the BS 20 may include a next generation-Node B (gNB) and/or an evolved-NodeB (eNB). For example, the UE 10 may be fixed or mobile and may be referred to as other terms, such as a mobile station (MS), a user terminal (UT), a subscriber station (SS), a mobile terminal (MT), wireless device, and so on. For example, the BS may be referred to as a fixed station which communicates with the UE 10 and may be referred to as other terms, such as a base transceiver system (BTS), an access point (AP), and so on.

The embodiment of FIG. 1 exemplifies a case where only the gNB is included. The BSs 20 may be connected to one another via Xn interface. The BS 20 may be connected to one another via 5th generation (5G) core network (5GC) and NG interface. More specifically, the BSs 20 may be connected to an access and mobility management function (AMF) 30 via NG-C interface, and may be connected to a user plane function (UPF) 30 via NG-U interface.

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

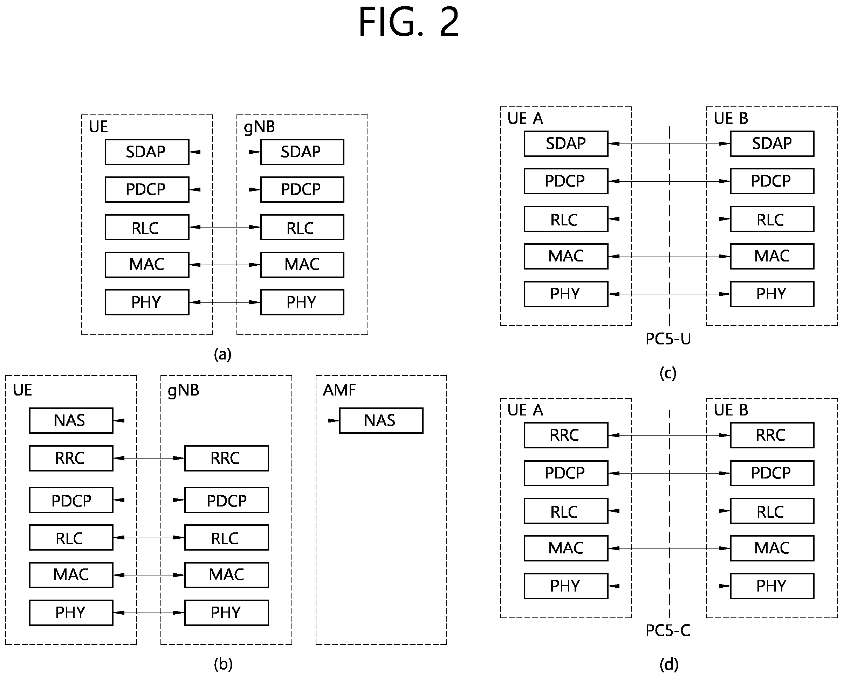

FIG. 2 shows a radio protocol architecture, based on an embodiment of the present disclosure. The embodiment of FIG. 2 may be combined with various embodiments of the present disclosure. Specifically, (a) of FIG. 2 shows a radio protocol stack of a user plane for Uu communication, and (b) of FIG. 2 shows a radio protocol stack of a control plane for Uu communication. (c) of FIG. 2 shows a radio protocol stack of a user plane for SL communication, and (d) of FIG. 2 shows a radio protocol stack of a control plane for SL communication.

Referring to FIG. 2, a physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

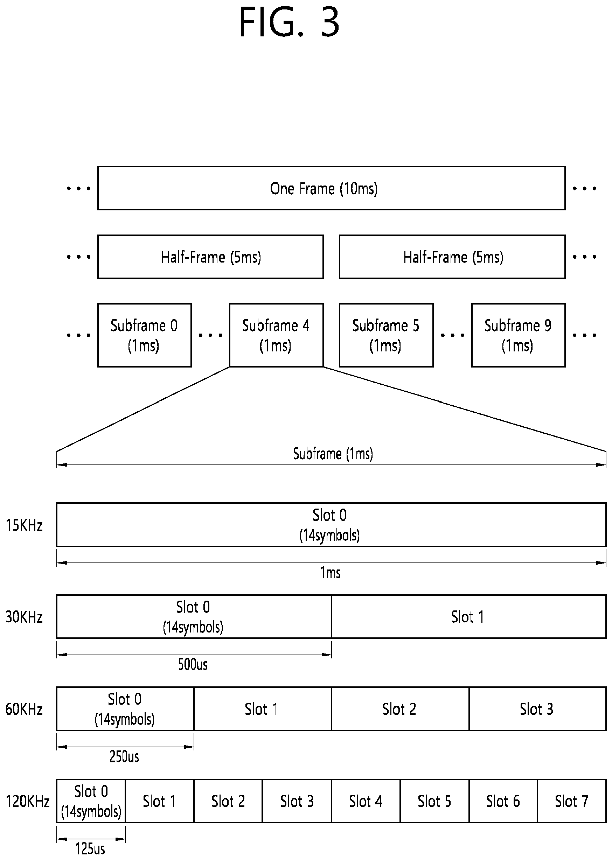

FIG. 3 shows a structure of a radio frame of an NR, based on an embodiment of the present disclosure. The embodiment of FIG. 3 may be combined with various embodiments of the present disclosure.

Referring to FIG. 3, in the NR, a radio frame may be used for performing uplink and downlink transmission. A radio frame has a length of 10ms and may be defined to be configured of two half-frames (HFs). A half-frame may include five 1ms subframes (SFs). A subframe (SF) may be divided into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

Table 1 shown below represents an example of a number of symbols per slot (N^{slot}_{symb}), a number slots per frame (N^{frame,u}ₛₗₒₜ), and a number of slots per subframe (N^{subframe,u}ₛₗₒₜ) based on an SCS configuration (u), in a case where a normal CP is used.

**[Table 1]**

| SCS (15*2^{u}) | N^{slot}_{symb} | N^{frame,u}ₛₗₒₜ | N^{subframe,}uₛₗₒₜ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

Table 2 shows an example of a number of symbols per slot, a number of slots per frame, and a number of slots per subframe based on the SCS, in a case where an extended CP is used.

**[Table 2]**

| SCS (15*2^{u}) | N^{slot}_{symb} | N^{frame,u}ₛₗₒₜ | N^{subframe,u}ₛₗₒₜ |
|---|---|---|---|
| 60KHz (u=2) | 12 | 40 | 4 |

In an NR system, OFDM(A) numerologies (e.g., SCS, CP length, and so on) between multiple cells being integrate to one UE may be differently configured. Accordingly, a (absolute time) duration (or section) of a time resource (e.g., subframe, slot or TTI) (collectively referred to as a time unit (TU) for simplicity) being configured of the same number of symbols may be differently configured in the integrated cells.

In the NR, multiple numerologies or SCSs for supporting diverse 5G services may be supported. For example, in case an SCS is 15kHz, a wide area of the conventional cellular bands may be supported, and, in case an SCS is 30kHz/60kHz a dense-urban, lower latency, wider carrier bandwidth may be supported. In case the SCS is 60kHz or higher, a bandwidth that is greater than 24.25GHz may be used in order to overcome phase noise.

An NR frequency band may be defined as two different types of frequency ranges. The two different types of frequency ranges may be FR1 and FR2. The values of the frequency ranges may be changed (or varied), and, for example, the two different types of frequency ranges may be as shown below in Table 3. Among the frequency ranges that are used in an NR system, FR1 may mean a "sub 6GHz range", and FR2 may mean an "above 6GHz range" and may also be referred to as a millimeter wave (mmW).

**[Table 3]**

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed (or varied). For example, as shown below in Table 4, FR1 may include a band within a range of 410MHz to 7125MHz. More specifically, FR1 may include a frequency band of 6GHz (or 5850, 5900, 5925 MHz, and so on) and higher. For example, a frequency band of 6GHz (or 5850, 5900, 5925 MHz, and so on) and higher being included in FR1 mat include an unlicensed band. The unlicensed band may be used for diverse purposes, e.g., the unlicensed band for vehicle-specific communication (e.g., automated driving).

**[Table 4]**

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

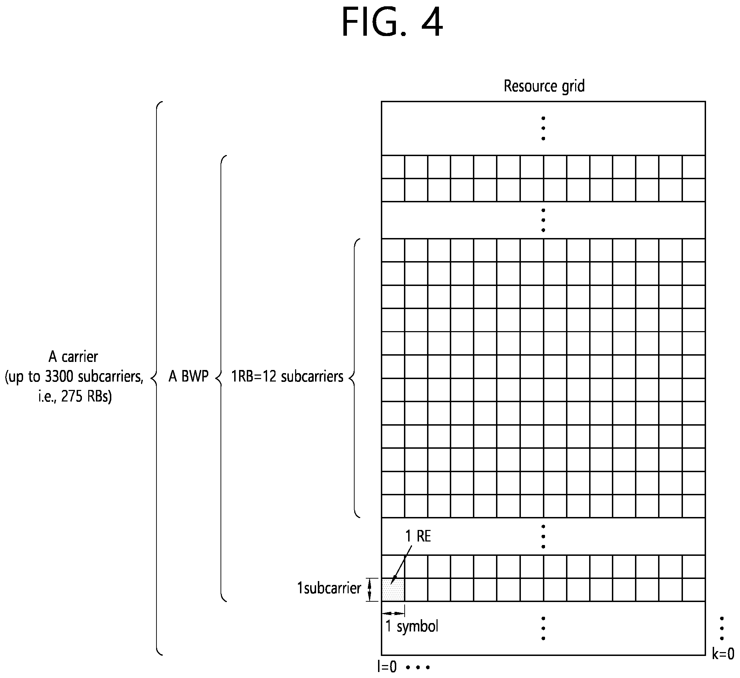

FIG. 4 shows a structure of a slot of an NR frame, based on an embodiment of the present disclosure. The embodiment of FIG. 4 may be combined with various embodiments of the present disclosure.

Referring to FIG. 4, a slot includes a plurality of symbols in a time domain. For example, in case of a normal CP, one slot may include 14 symbols. However, in case of an extended CP, one slot may include 12 symbols. Alternatively, in case of a normal CP, one slot may include 7 symbols. However, in case of an extended CP, one slot may include 6 symbols.

A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on). A carrier may include a maximum of N number BWPs (e.g., 5 BWPs). Data communication may be performed via an activated BWP. Each element may be referred to as a Resource Element (RE) within a resource grid and one complex symbol may be mapped to each element.

Hereinafter, a bandwidth part (BWP) and a carrier will be described.

The BWP may be a set of consecutive physical resource blocks (PRBs) in a given numerology. The PRB may be selected from consecutive sub-sets of common resource blocks (CRBs) for the given numerology on a given carrier

For example, the BWP may be at least any one of an active BWP, an initial BWP, and/or a default BWP. For example, the UE may not monitor downlink radio link quality in a DL BWP other than an active DL BWP on a primary cell (PCell). For example, the UE may not receive PDCCH, physical downlink shared channel (PDSCH), or channel state information - reference signal (CSI-RS) (excluding RRM) outside the active DL BWP. For example, the UE may not trigger a channel state information (CSI) report for the inactive DL BWP. For example, the UE may not transmit physical uplink control channel (PUCCH) or physical uplink shared channel (PUSCH) outside an active UL BWP. For example, in a downlink case, the initial BWP may be given as a consecutive RB set for a remaining minimum system information (RMSI) control resource set (CORESET) (configured by physical broadcast channel (PBCH)). For example, in an uplink case, the initial BWP may be given by system information block (SIB) for a random access procedure. For example, the default BWP may be configured by a higher layer. For example, an initial value of the default BWP may be an initial DL BWP. For energy saving, if the UE fails to detect downlink control information (DCI) during a specific period, the UE may switch the active BWP of the UE to the default BWP.

Meanwhile, the BWP may be defined for SL. The same SL BWP may be used in transmission and reception. For example, a transmitting UE may transmit a SL channel or a SL signal on a specific BWP, and a receiving UE may receive the SL channel or the SL signal on the specific BWP. In a licensed carrier, the SL BWP may be defined separately from a Uu BWP, and the SL BWP may have configuration signaling separate from the Uu BWP. For example, the UE may receive a configuration for the SL BWP from the BS/network. For example, the UE may receive a configuration for the Uu BWP from the BS/network. The SL BWP may be (pre-)configured in a carrier with respect to an out-of-coverage NR V2X UE and an RRC_IDLE UE. For the UE in the RRC_CONNECTED mode, at least one SL BWP may be activated in the carrier.

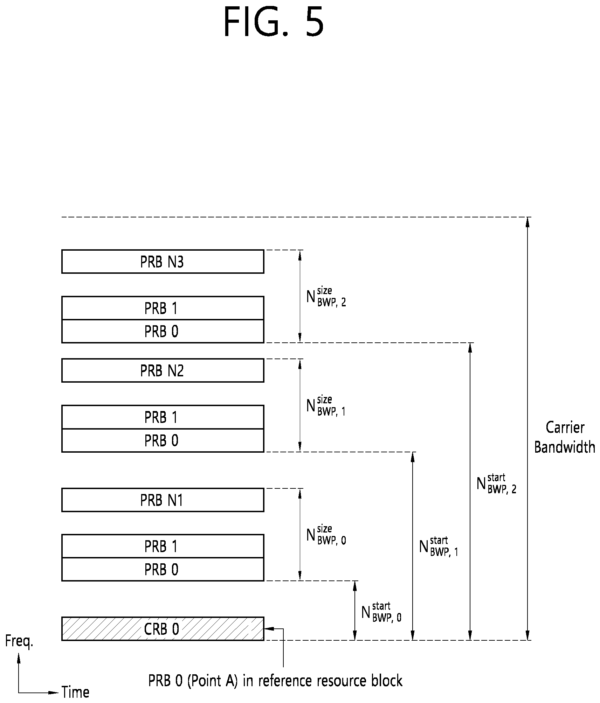

FIG. 5 shows an example of a BWP, based on an embodiment of the present disclosure. The embodiment of FIG. 5 may be combined with various embodiments of the present disclosure. It is assumed in the embodiment of FIG. 5 that the number of BWPs is 3.

Referring to FIG. 5, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset N^{start}_{BWP} from the point A, and a bandwidth N^{size}_{BWP}. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

Hereinafter, V2X or SL communication will be described.

A sidelink synchronization signal (SLSS) may include a primary sidelink synchronization signal (PSSS) and a secondary sidelink synchronization signal (SSSS), as a SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

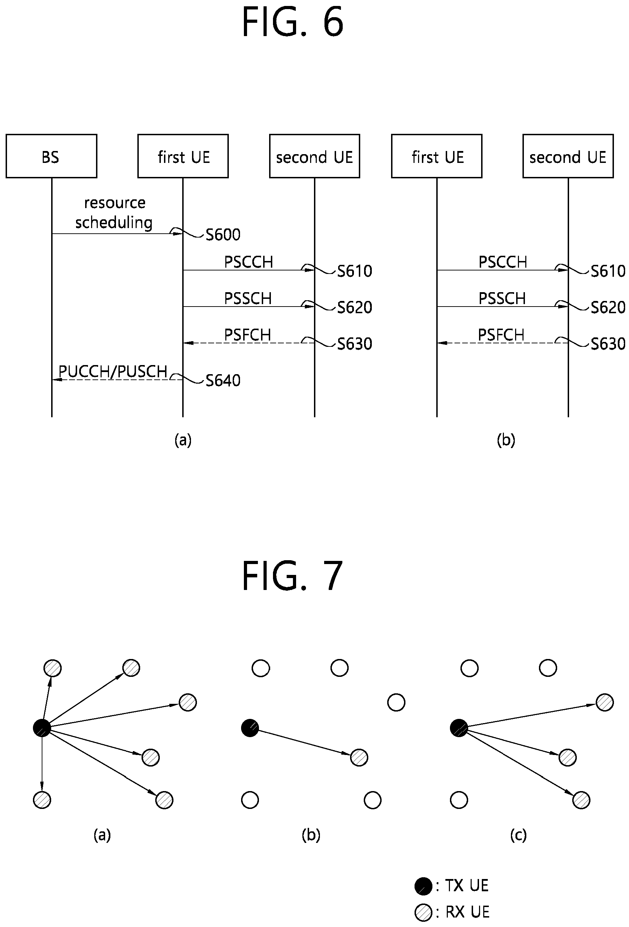

FIG. 6 shows a procedure of performing V2X or SL communication by a UE based on a transmission mode, based on an embodiment of the present disclosure. The embodiment of FIG. 6 may be combined with various embodiments of the present disclosure. In various embodiments of the present disclosure, the transmission mode may be called a mode or a resource allocation mode. Hereinafter, for convenience of explanation, in LTE, the transmission mode may be called an LTE transmission mode. In NR, the transmission mode may be called an NR resource allocation mode.

For example, (a) of FIG. 6 shows a UE operation related to an LTE transmission mode 1 or an LTE transmission mode 3. Alternatively, for example, (a) of FIG. 6 shows a UE operation related to an NR resource allocation mode 1. For example, the LTE transmission mode 1 may be applied to general SL communication, and the LTE transmission mode 3 may be applied to V2X communication.

For example, (b) of FIG. 6 shows a UE operation related to an LTE transmission mode 2 or an LTE transmission mode 4. Alternatively, for example, (b) of FIG. 6 shows a UE operation related to an NR resource allocation mode 2.

Referring to (a) of FIG. 6, in the LTE transmission mode 1, the LTE transmission mode 3, or the NR resource allocation mode 1, a base station may schedule SL resource(s) to be used by a UE for SL transmission. For example, in step S600, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S610, the first UE may transmit a PSCCH (e.g., sidelink control information (SCI) or 1^{st}-stage SCI) to a second UE based on the resource scheduling. In step S620, the first UE may transmit a PSSCH (e.g., 2^{nd}-stage SCI, MAC PDU, data, etc.) related to the PSCCH to the second UE. In step S630, the first UE may receive a PSFCH related to the PSCCH/PSSCH from the second UE. For example, HARQ feedback information (e.g., NACK information or ACK information) may be received from the second UE through the PSFCH. In step S640, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling. For example, a format of the DCI may be a DCI format 3_0 or a DCI format 3_1.

Hereinafter, an example of DCI format 3_0 will be described.

DCI format 3_0 is used for scheduling of NR PSCCH and NR PSSCH in one cell.

The following information is transmitted by means of the DCI format 3_0 with CRC scrambled by SL-RNTI or SL-CS-RNTI:
- Resource pool index - ceiling (log₂ I) bits, where I is the number of resource pools for transmission configured by the higher layer parameter sl-TxPoolScheduling.
- Time gap - 3 bits determined by higher layer parameter sl-DCI-ToSL-Trans
- HARQ process number - 4 bits
- New data indicator - 1 bit
- Lowest index of the subchannel allocation to the initial transmission - ceiling (log₂(N^{SL}_{subChannel})) bits
- SCI format 1-A fields: frequency resource assignment, time resource assignment
- PSFCH-to-HARQ feedback timing indicator - ceiling (log₂ N_{fb_timing}) bits, where N_{fb_timing} is the number of entries in the higher layer parameter sl-PSFCH-ToPUCCH.
- PUCCH resource indicator - 3 bits
- Configuration index - 0 bit if the UE is not configured to monitor DCI format 3_0 with CRC scrambled by SL-CS-RNTI; otherwise 3 bits. If the UE is configured to monitor DCI format 3_0 with CRC scrambled by SL-CS-RNTI, this field is reserved for DCI format 3_0 with CRC scrambled by SL-RNTI.
- Counter sidelink assignment index - 2 bits, 2 bits if the UE is configured with pdsch-HARQ-ACK-Codebook = dynamic, 2 bits if the UE is configured with pdsch-HARQ-ACK-Codebook = semi-static
- Padding bits, if required

Referring to (b) of FIG. 6, in the LTE transmission mode 2, the LTE transmission mode 4, or the NR resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S610, a first UE which has selected resource(s) from a resource pool by itself may transmit a PSCCH (e.g., sidelink control information (SCI) or 1^{st}-stage SCI) to a second UE by using the resource(s). In step S620, the first UE may transmit a PSSCH (e.g., 2^{nd}-stage SCI, MAC PDU, data, etc.) related to the PSCCH to the second UE. In step S630, the first UE may receive a PSFCH related to the PSCCH/PSSCH from the second UE.

Referring to (a) or (b) of FIG. 6, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1^{st} SCI, a first SCI, a 1^{st}-stage SCI or a 1^{st}-stage SCI format, and a SCI transmitted through a PSSCH may be referred to as a 2^{nd} SCI, a second SCI, a 2^{nd}-stage SCI or a 2^{nd}-stage SCI format. For example, the 1^{st}-stage SCI format may include a SCI format 1-A, and the 2^{nd}-stage SCI format may include a SCI format 2-A and/or a SCI format 2-B.

Hereinafter, an example of SCI format 1-A will be described.

SCI format 1-A is used for the scheduling of PSSCH and 2nd-stage-SCI on PSSCH.

The following information is transmitted by means of the SCI format 1-A:
- Priority - 3 bits
- Frequency resource assignment - ceiling (log₂(N^{SL}_{subChannel}(N^{SL}_{subChannel}+1)/2)) bits when the value of the higher layer parameter sl-MaxNumPerReserve is configured to 2; otherwise ceiling log₂(N^{SL}_{subChannel}(N^{SL}_{subChannel}+1)(2N^{SL}_{subChannel}+1)/6) bits when the value of the higher layer parameter sl-MaxNumPerReserve is configured to 3
- Time resource assignment - 5 bits when the value of the higher layer parameter sl-MaxNumPerReserve is configured to 2; otherwise 9 bits when the value of the higher layer parameter sl-MaxNumPerReserve is configured to 3
- Resource reservation period - ceiling (log₂ N_{rsv_period}) bits, where N_{rsv_period} is the number of entries in the higher layer parameter sl-ResourceReservePeriodList, if higher layer parameter sl-MultiReserveResource is configured; 0 bit otherwise
- DMRS pattern - ceiling (log₂ Nₚₐₜₜₑᵣₙ) bits, where Nₚₐₜₜₑᵣₙ is the number of DMRS patterns configured by higher layer parameter sl-PSSCH-DMRS-TimePatternList
- 2^{nd}-stage SCI format - 2 bits as defined in Table 5
- Beta_offset indicator - 2 bits as provided by higher layer parameter sl-BetaOffsets2ndSCI
- Number of DMRS port - 1 bit as defined in Table 6
- Modulation and coding scheme - 5 bits
- Additional MCS table indicator - 1 bit if one MCS table is configured by higher layer parameter sl-Additional-MCS-Table; 2 bits if two MCS tables are configured by higher layer parameter sl- Additional-MCS-Table; 0 bit otherwise
- PSFCH overhead indication - 1 bit if higher layer parameter sl-PSFCH-Period = 2 or 4; 0 bit otherwise
- Reserved - a number of bits as determined by higher layer parameter sl-NumReservedBits, with value set to zero.

**[Table 5]**

| Value of 2^{nd}-stage SCI format field | 2^{nd}-stage SCI format |
|---|---|
| 00 | SCI format 2-A |
| 01 | SCI format 2-B |
| 10 | Reserved |
| 11 | Reserved |

**[Table 6]**

| Value of the Number of DMRS port field | Antenna ports |
|---|---|
| 0 | 1000 |
| 1 | 1000 and 1001 |

Hereinafter, an example of SCI format 2-A will be described.

SCI format 2-A is used for the decoding of PSSCH, with HARQ operation when HARQ-ACK information includes ACK or NACK, when HARQ-ACK information includes only NACK, or when there is no feedback of HARQ-ACK information.

The following information is transmitted by means of the SCI format 2-A:
- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Cast type indicator - 2 bits as defined in Table 7
- CSI request - 1 bit

**[Table 7]**

| Value of Cast type indicator | Cast type |
|---|---|
| 00 | Broadcast |
| 01 | Groupcast when HARQ-ACK information includes ACK or NACK |
| 10 | Unicast |
| 11 | Groupcast when HARQ-ACK information includes only NACK |

Hereinafter, an example of SCI format 2-B will be described.

SCI format 2-B is used for the decoding of PSSCH, with HARQ operation when HARQ-ACK information includes only NACK, or when there is no feedback of HARQ-ACK information.

The following information is transmitted by means of the SCI format 2-B:
- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Zone ID - 12 bits
- Communication range requirement - 4 bits determined by higher layer parameter sl-ZoneConfigMCR-Index

Referring to (a) or (b) of FIG. 6, in step S630, the first UE may receive the PSFCH. For example, the first UE and the second UE may determine a PSFCH resource, and the second UE may transmit HARQ feedback to the first UE using the PSFCH resource.

Referring to (a) of FIG. 6, in step S640, the first UE may transmit SL HARQ feedback to the base station through the PUCCH and/or the PUSCH.

FIG. 7 shows three cast types, based on an embodiment of the present disclosure. The embodiment of FIG. 7 may be combined with various embodiments of the present disclosure. Specifically, (a) of FIG. 7 shows broadcast-type SL communication, (b) of FIG. 7 shows unicast type-SL communication, and (c) of FIG. 7 shows groupcast-type SL communication. In case of the unicast-type SL communication, a UE may perform one-to-one communication with respect to another UE. In case of the groupcast-type SL transmission, the UE may perform SL communication with respect to one or more UEs in a group to which the UE belongs. In various embodiments of the present disclosure, SL groupcast communication may be replaced with SL multicast communication, SL one-to-many communication, or the like.

Hereinafter, a hybrid automatic repeat request (HARQ) procedure will be described.

For example, the SL HARQ feedback may be enabled for unicast. In this case, in a non-code block group (non-CBG) operation, if the receiving UE decodes a PSCCH of which a target is the receiving UE and if the receiving UE successfully decodes a transport block related to the PSCCH, the receiving UE may generate HARQ-ACK. In addition, the receiving UE may transmit the HARQ-ACK to the transmitting UE. Otherwise, if the receiving UE cannot successfully decode the transport block after decoding the PSCCH of which the target is the receiving UE, the receiving UE may generate the HARQ-NACK. In addition, the receiving UE may transmit HARQ-NACK to the transmitting UE.

For example, the SL HARQ feedback may be enabled for groupcast. For example, in the non-CBG operation, two HARQ feedback options may be supported for groupcast.
(1) Groupcast option 1: After the receiving UE decodes the PSCCH of which the target is the receiving UE, if the receiving UE fails in decoding of a transport block related to the PSCCH, the receiving UE may transmit HARQ-NACK to the transmitting UE through a PSFCH. Otherwise, if the receiving UE decodes the PSCCH of which the target is the receiving UE and if the receiving UE successfully decodes the transport block related to the PSCCH, the receiving UE may not transmit the HARQ-ACK to the transmitting UE.
(2) Groupcast option 2: After the receiving UE decodes the PSCCH of which the target is the receiving UE, if the receiving UE fails in decoding of the transport block related to the PSCCH, the receiving UE may transmit HARQ-NACK to the transmitting UE through the PSFCH. In addition, if the receiving UE decodes the PSCCH of which the target is the receiving UE and if the receiving UE successfully decodes the transport block related to the PSCCH, the receiving UE may transmit the HARQ-ACK to the transmitting UE through the PSFCH.

For example, if the groupcast option 1 is used in the SL HARQ feedback, all UEs performing groupcast communication may share a PSFCH resource. For example, UEs belonging to the same group may transmit HARQ feedback by using the same PSFCH resource.

For example, if the groupcast option 2 is used in the SL HARQ feedback, each UE performing groupcast communication may use a different PSFCH resource for HARQ feedback transmission. For example, UEs belonging to the same group may transmit HARQ feedback by using different PSFCH resources.

In the present disclosure, HARQ-ACK may be referred to as ACK, ACK information, or positive-ACK information, and HARQ-NACK may be referred to as NACK, NACK information, or negative-ACK information.

Hereinafter, UE procedure for reporting HARQ-ACK on sidelink will be described.

A UE can be indicated by an SCI format scheduling a PSSCH reception, in one or more sub-channels from a number of N^{PSSCH}_{subch} sub-channels, to transmit a PSFCH with HARQ-ACK information in response to the PSSCH reception. The UE provides HARQ-ACK information that includes ACK or NACK, or only NACK.

A UE can be provided, by sl-PSFCH-Period-r16, a number of slots in a resource pool for a period of PSFCH transmission occasion resources. If the number is zero, PSFCH transmissions from the UE in the resource pool are disabled. A UE expects that a slot t'ₖ^{SL} (0 ≤ k < T'ₘₐₓ) has a PSFCH transmission occasion resource if k mod N^{PSFCH}_{PSSCH} = 0, where t'ₖ^{SL} is a slot that belongs to the resource pool, T'ₘₐₓ is a number of slots that belong to the resource pool within 10240 msec, and N^{PSFCH}_{PSSCH} is provided by sl-PSFCH-Period-r16. A UE may be indicated by higher layers to not transmit a PSFCH in response to a PSSCH reception.If a UE receives a PSSCH in a resource pool and the HARQ feedback enabled/disabled indicator field in an associated SCI format 2-A or a SCI format 2-B has value 1, the UE provides the HARQ-ACK information in a PSFCH transmission in the resource pool. The UE transmits the PSFCH in a first slot that includes PSFCH resources and is at least a number of slots, provided by sl-MinTimeGapPSFCH-r16, of the resource pool after a last slot of the PSSCH reception.

A UE is provided by sl-PSFCH-RB-Set-r16 a set of M^{PSFCH}_{PRB,set} PRBs in a resource pool for PSFCH transmission in a PRB of the resource pool. For a number of N_{subch} sub-channels for the resource pool, provided by sl-NumSubchannel, and a number of PSSCH slots associated with a PSFCH slot that is less than or equal to N^{PSFCH}_{PSSCH}, the UE allocates the [(i+j·N^{PSFCH}_{PSSCH})·M^{PSFCH}_{subch,slot}, (i+1+j·N^{PSFCH}_{PSSCH})·M^{PSFCH}_{subch,slot}-1] PRBs from the M_{PRB,set}^{PSFCH} PRBs to slot i among the PSSCH slots associated with the PSFCH slot and sub-channel j, where M^{PSFCH}_{subch,slot} = M^{PSFCH}_{PRB,set} / (N_{subch}·N^{PSFCH}_{PSSCH}), 0 ≤ i < N^{PSFCH}_{PSSCH}, 0 ≤ j < N_{subch}, and the allocation starts in an ascending order of i and continues in an ascending order of j. The UE expects that M^{PSFCH}_{PRB,set} is a multiple of N_{subch}·N^{PSFCH}_{PSSCH}.

A UE determines a number of PSFCH resources available for multiplexing HARQ-ACK information in a PSFCH transmission as R^{PSFCH}_{PRB,CS} = N^{PSFCH}_{type}·M^{PSFCH}_{subch,slot}·N^{PSFCH}_{CS} where N^{PSFCH}_{CS} is a number of cyclic shift pairs for the resource pool and, based on an indication by higher layers,
- N^{PSFCH}_{type} = 1 and the M^{PSFCH}_{subch,slot} PRBs are associated with the starting sub-channel of the corresponding PSSCH
- N^{PSFCH}_{type} = N^{PSSCH}_{subch} and the N^{PSSCH}_{subch}·M^{PSFCH}_{subch,slot} PRBs are associated with one or more sub-channels from the N^{PSSCH}_{subch} sub-channels of the corresponding PSSCH

The PSFCH resources are first indexed according to an ascending order of the PRB index, from the N^{PSFCH}_{type}·M^{PSFCH}_{subch,slot} PRBs, and then according to an ascending order of the cyclic shift pair index from the N^{PSFCH}_{CS} cyclic shift pairs.

A UE determines an index of a PSFCH resource for a PSFCH transmission in response to a PSSCH reception as (P_{ID} + M_{ID}) mod R^{PSFCH}_{PRB,CS} where P_{ID} is a physical layer source ID provided by SCI format 2-A or 2-B scheduling the PSSCH reception, and M_{ID} is the identity of the UE receiving the PSSCH as indicated by higher layers if the UE detects a SCI format 2-A with Cast type indicator field value of "01"; otherwise, M_{ID} is zero.

A UE determines a m₀ value, for computing a value of cyclic shift a, from a cyclic shift pair index corresponding to a PSFCH resource index and from N^{PSFCH}_{CS} using Table 8.

**[Table 8]**

| N^{PSFCH}_{CS} | m₀ | | | | | |
|---|---|---|---|---|---|---|
| | cyclic shift pair index 0 | cyclic shift pair index 1 | cyclic shift pair index 2 | cyclic shift pair index 3 | cyclic shift pair index 4 | cyclic shift pair index 5 |
| 1 | 0 | - | - | - | - | - |
| 2 | 0 | 3 | - | - | - | - |
| 3 | 0 | 2 | 4 | - | - | - |
| 6 | 0 | 1 | 2 | 3 | 4 | 5 |

A UE determines a m_{cs} value, for computing a value of cyclic shift a, as in Table 9 if the UE detects a SCI format 2-A with Cast type indicator field value of "01" or "10", or as in Table 10 if the UE detects a SCI format 2-B or a SCI format 2-A with Cast type indicator field value of "11". The UE applies one cyclic shift from a cyclic shift pair to a sequence used for the PSFCH transmission.

**[Table 9]**

| HARQ-ACK Value | 0 (NACK) | 1 (ACK) |
|---|---|---|
| Sequence cyclic shift | 0 | 6 |

**[Table 10]**

| HARQ-ACK Value | 0 (NACK) | 1 (ACK) |
|---|---|---|
| Sequence cyclic shift | 0 | N/A |

Meanwhile, in NR V2X of Release 16, a power saving operation of a UE was not supported. On the other hand, from NR V2X of Release 17, the power saving operation of a UE (e.g., power saving UE) will be supported.

Meanwhile, for the power saving operation of the UE (e.g., SL DRX operation), a SL DRX configuration (e.g., SL DRX cycle, SL DRX on-duration timer, SL DRX slot offset (e.g., offset representing the start of the SL DRX on-duration timer), SL DRX start offset (e.g., offset representing the start of the SL DRX cycle), timer to support the SL DRX operation, etc.) to be used by the power saving UE (P-UE) should be defined. Furthermore, the operation of the transmitting (TX) UE and the receiving (RX) UE in the on-duration (e.g., the period during which sidelink reception/transmission can be performed) and/or the off-duration (e.g., the period during which the UE operate in sleep mode) should be defined.

Meanwhile, according to the conventional NR SL operation, the TX UE may perform a prioritization operation based on a SL priority of SL data.

For example, if the TX UE has SL data to transmit and UL data to transmit at the same time, the TX UE may determine whether to transmit the UL data first or the SL data first based on a priority of the UL data and a priority of the SL data. Alternatively, if the TX UE has multiple SL data to transmit (e.g., SL MAC CE, SL user data, or SL user data with different priorities), the TX UE may determine which SL data to transmit first based on each priority of each SL data (e.g., PC5 RRC message, SL MAC CE, SL user data). That is, data with a high priority (e.g., data with a relatively small priority value) may be transmitted first. In this case, the following problems may occur in the SL DRX operation.

The RX UE performing the SL DRX operation may operate in active time by default during the SL DRX on-duration timer duration to receive a PSCCH/PSSCH from the counterpart TX UE, and the RX UE may monitor the PSCCH/PSSCH transmitted by the TX UE during active time. In this case, if the TX UE drops SL data transmission with a low priority (i.e., large priority value) due to a UL/SL prioritization procedure (e.g., determining the transmission priority between UL data and SL data) or a SL/SL prioritization procedure (e.g., determining the transmission priority between SL data), there may be a delay in the SL data transmission with the low priority, which may cause the SL data transmission with the low priority to not occur until the SL DRX on-duration timer of the RX UE expires. Therefore, a problem may occur in which the RX UE may miss reception of the SL data with the low priority transmitted by the TX UE.

In addition, the RX UE may perform an operation of extending a SL DRX on-duration timer by a SL DRX inactivity timer duration. That is, if the RX UE receives a new packet (e.g., new PSSCH transmission) from the counterpart TX UE, the RX UE may extend the SL DRX on-duration timer by the duration of the SL DRX inactivity timer by starting the SL DRX inactivity timer. In other words, the RX UE may start the SL DRX inactivity timer, and the RX UE may be in an active state while the SL DRX inactivity timer is running. In this case, if the TX UE drops SL data transmission with a low priority (i.e., large priority value) due to a UL/SL prioritization procedure (e.g., determining the transmission priority between UL data and SL data) or a SL/SL prioritization procedure (e.g., determining the transmission priority between SL data), there may be a delay in the SL data transmission with the low priority. As a result, the SL data transmission with the low priority may not occur before the SL DRX inactivity timer of the RX UE expires, or the SL data with the low priority may not be transmitted before the SL DRX inactivity timer expires.

In addition, if the RX UE transmits SL HARQ NACK feedback after receiving a PSCCH/PSSCH transmitted by the TX UE, the RX UE may start a SL DRX HARQ RTT timer, and the RX UE may determine that the counterpart TX UE will not transmit a sidelink retransmission packet to the RX UE until the SL DRX HARQ RTT timer expires, and the RX UE may operate in sleep mode while the corresponding timer is running. If the SL DRX HARQ RTT timer expires, the RX UE may transition from sleep mode to active mode and monitor a retransmission packet (or PSSCH assignment) transmitted by the counterpart TX UE. If the TX UE drops SL data retransmission with a low priority (i.e., large priority value) due to a UL/SL prioritization procedure (e.g., determining the transmission priority between UL data and SL data) or SL/SL prioritization procedure (e.g., determining the transmission priority between SL data), there may be a delay in the SL data retransmission with the low priority. As a result, the SL data retransmission with the low priority may not occur before the SL DRX retransmission timer of the RX UE expires, or the SL data retransmission with the low priority may not be retransmitted before the SL DRX retransmission timer expires. Since the probability of dropping SL data transmission with a low SL priority (i.e., large SL priority value) is higher than the probability of dropping SL data transmission with a high SL priority (i.e., small SL priority value), the above problem may occur.

Meanwhile, the RX UE may drop PSFCH transmission based on the UL/SL prioritization procedure or the SL/SL prioritization procedure. In this case, when performing the NACK-only based HARQ feedback operation, the TX UE may determine that the RX UE has successfully decoded data, and the TX UE may not perform retransmission of the data. Specifically, for example, if the cast type indicator included in the SCI format 2-A is set to 11, and the HARQ feedback enabled/disabled indicator included in the SCI format 2-A is set to HARQ feedback enabled, the TX UE that has not received a PSFCH may determine that the RX UE has successfully decoded data, and the TX UE may not perform retransmission of the data. For example, if the HARQ feedback enabled/disabled indicator included in the SCI format 2-B is set to HARQ feedback enabled, the TX UE that has not received a PSFCH may determine that the RX UE has successfully decoded data, and the TX UE may not perform retransmission of the data. This may lead to transmission failure for the RX UE.

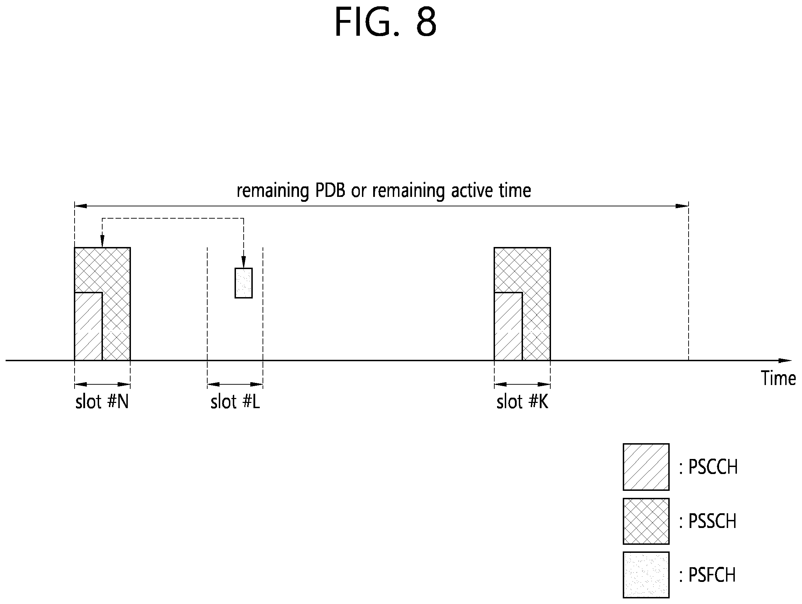

FIG. 8 is a drawing for explaining a problem according to the prior art.

Referring to FIG. 8, the TX UE may transmit a PSCCH and a PSSCH to the RX UE in slot #N. In the embodiment of FIG. 8, it is assumed that the retransmission resource associated with the PSSCH transmitted in slot #N is allocated/reserved in slot #K, and the PSFCH resource related to the PSSCH transmitted in slot #N is allocated in slot #L. It is further assumed that slot #K is within the remaining PDB or the remaining active time. In this case, if the RX UE fails to decode the PSSCH transmitted in slot #N, the RX UE may transmit NACK information to the TX UE based on the PSFCH resource allocated in slot #L, and the RX UE may receive a PSCCH and a PSSCH retransmitted by the TX UE in slot #K.

However, if the RX UE drops the PSFCH transmission in slot #L due to the UL/SL prioritization procedure or the SL/SL prioritization procedure, the TX UE may determine that the RX UE has successfully decoded the PSCCH and the PSSCH, and the TX UE may not retransmit the PSCCH and PSSCH in slot #K. Specifically, for example, if the cast type indicator included in the SCI format 2-A transmitted in slot #N is set to 11, and the HARQ feedback enabled/disabled indicator included in the SCI format 2-A transmitted in slot #N is set to HARQ feedback enabled, the TX UE that has not received the PSFCH may determine that the RX UE has successfully decoded the PSCCH and the PSSCH, and the TX UE may not retransmit the PSCCH and the PSSCH in slot #K. For example, if the HARQ feedback enabled/disabled indicator included in the SCI format 2-B transmitted in slot #N is set to HARQ feedback enabled, the TX UE that has not received the PSFCH may determine that the RX UE has successfully decoded the PSCCH and the PSSCH, and the TX UE may not retransmit the PSCCH and the PSSCH in slot #K. This may lead to transmission failure for the RX UE. Therefore, in order to solve the above problem, if the remaining PDB is less than or equal to a threshold or if the remaining active time is less than or equal to a threshold, it is necessary to prevent a situation in which PSFCH transmission is dropped as much as possible.

Based on various embodiments of the present disclosure, a method for performing a SL power saving operation, by an RX UE which receives SCI and a PSSCH (e.g., SL data) related to the SCI transmitted by a TX UE, based on a SL priority value included in the SCI, and an apparatus supporting the same, are proposed. In the present disclosure, the SCI may include priority information, and the priority information may be a priority of a PSSCH (e.g., SL data) related to the SCI, and a smaller SL priority value may be considered a higher priority PSSCH (e.g., SL data).

Based on various embodiments of the present disclosure, a method for prioritizing HARQ feedback for a PSSCH, by an RX UE which receives SCI and the PSSCH (e.g., SL data) related to the SCI transmitted by a TX UE, and an apparatus supporting the same, are proposed.

The SL DRX configuration mentioned in the present disclosure may include at least one of the following parameters/information.
(1) SL drx-onDurationTimer: the duration at the beginning of a SL DRX Cycle
(2) SL drx-SlotOffset: the delay before starting the sl drx-onDurationTimer
(3) SL drx-InactivityTimer: the duration after the PSCCH occasion in which a PSCCH indicates a new SL transmission for the MAC entity
(4) SL drx-StartOffset: the subframe where the SL DRX cycle starts
(5) SL drx-Cycle: SL DRX cycle
(6) SL drx-HARQ-RTT-Timer (per HARQ process or per sidelink process): the minimum duration before an assignment for HARQ retransmission is expected by the MAC entity
(7) SL drx-RetransmissionTimer (per HARQ process or per sidelink process): the maximum duration until a retransmission is received

The SL DRX timer mentioned in the present disclosure may be used for the following purposes.
(1) SL DRX on-duration timer: the duration in which a UE performing the SL DRX operation should basically operate in active time for PSCCH/PSSCH reception of a counterpart UE
(2) SL DRX inactivity timer: the duration in which a UE performing the SL DRX operation extends the SL DRX on-duration duration, which is the duration in which the UE should basically operate in active time for PSCCH/PSSCH reception of a counterpart UE

For example, the UE may extend the SL DRX on-duration timer by the SL DRX inactivity timer duration. Also, if the UE receives a new packet (e.g., new PSSCH transmission) from the counterpart UE, the UE may extend the SL DRX on-duration timer by starting the SL DRX inactivity timer.

For example, the SL DRX inactivity timer may be used to extend the SL DRX on-duration timer duration, which is the duration in which the RX UE performing the SL DRX operation should basically operate in active time for PSCCH/PSSCH reception of a counterpart UE. That is, the SL DRX on-duration timer may be extended by the SL DRX inactivity timer duration. In addition, if the RX UE receives a new packet (e.g., new PSSCH transmission) from the counterpart TX UE, the RX UE may extend the SL DRX on-duration timer by starting the SL DRX inactivity timer.

(3) SL DRX HARQ RTT timer: the duration in which a UE performing the SL DRX operation operates in sleep mode before the UE receives a retransmission packet (or PSSCH assignment) transmitted by a counterpart UE

For example, if the UE starts the SL DRX HARQ RTT timer, the UE may determine that the counterpart UE will not transmit a sidelink retransmission packet to the UE until the SL DRX HARQ RTT timer expires, and the UE may operate in sleep mode while the corresponding timer is running. For example, if the UE starts the SL DRX HARQ RTT timer, the UE may not monitor the sidelink retransmission packet from the counterpart UE until the SL DRX HARQ RTT timer expires. For example, if the RX UE that has received a PSCCH/PSSCH transmitted by the TX UE transmits SL HARQ NACK feedback, the RX UE may start the SL DRX HARQ RTT timer. In this case, the RX UE may determine that the counterpart UE will not transmit a sidelink retransmission packet to the RX UE until the SL DRX HARQ RTT timer expires, and the RX UE may operate in sleep mode while the corresponding timer is running.

(4) SL DRX retransmission timer: the timer that starts when the SL DRX HARQ RTT timer expires, and the duration in which a UE performing SL DRX operation operates in active time to receive a retransmission packet (or PSSCH assignment) transmitted by a counterpart UE

For example, during the corresponding timer duration, the UE may receive or monitor a sidelink retransmission packet (or PSSCH assignment) transmitted by the counterpart UE. For example, the RX UE may receive or monitor a sidelink retransmission packet (or PSSCH assignment) transmitted by the counterpart TX UE while the SL DRX retransmission timer is running.

In the present disclosure, the names of timers (Uu DRX HARQ RTT TimerSL, Uu DRX Retransmission TimerSL, Sidelink DRX Onduration Timer, Sidelink DRX Inactivity Timer, Sidelink DRX HARQ RTT Timer, Sidelink DRX Retransmission Timer, etc.) are exemplary, and a timer performing the same/similar function based on the description of each timer may be regarded as the same/similar timer regardless of its name.

Based on an embodiment of the present disclosure, the RX UE may perform the SL DRX operation by configuring different SL DRX inactivity timer values and SL DRX retransmission timer values for each SL priority. For example, in the SL DRX operation, a SL DRX inactivity timer value and a SL DRX retransmission timer value applied when the RX UE receives SL data (e.g., PSSCH) with a low SL priority (i.e., large SL priority value) may be greater than a SL DRX inactivity timer value and a SL DRX retransmission timer value applied when the RX UE receives SL data (e.g., PSSCH) with a high SL priority (i.e., small SL priority value). That is, SL DRX inactivity timer values and SL DRX retransmission timer values may be configured differently for different SL priorities (e.g., 1, 2, 3, 4, 5, 6, 7, 8). For example, a duration of a SL DRX inactivity timer and a duration of a SL DRX retransmission timer mapped to a smaller SL priority value (e.g., higher priority service) may be configured to be shorter. For example, compared to a duration of a SL DRX inactivity timer and a duration of a SL DRX retransmission timer mapped to a larger SL priority value (e.g., lower priority service), a duration of a SL DRX inactivity timer and a duration of a SL DRX retransmission timer mapped to a smaller SL priority value (e.g., higher priority service) may be configured to be shorter. That is, the duration of the SL DRX inactivity timer and the duration of the SL DRX retransmission timer mapped to the SL priority value 1 may be configured to the shortest value. The duration of the SL DRX inactivity timer and the duration of the SL DRX retransmission timer mapped to the SL priority value 8 may be configured to the longest value.

By applying the proposal of the present disclosure, the UE may perform the following SL DRX operation.

If the RX UE receives SCI and a new packet related to the SCI (e.g., new PSSCH transmission) from the counterpart TX UE, the RX UE may extend the SL DRX on-duration timer by the time of the SL DRX inactivity timer by starting the SL DRX inactivity timer related to the SL priority included in the SCI. In this case, based on the prior art, if the TX UE drops SL data transmission with a low priority (i.e., large priority value) due to a UL/SL prioritization procedure (e.g., determining the transmission priority between UL data and SL data) or a SL/SL prioritization procedure (e.g., determining the transmission priority between SL data), there may be a delay in the SL data transmission with the low priority. As a result, the SL data transmission with the low priority may not occur before the SL DRX inactivity timer of the RX UE expires, or the SL data with the low priority may not be transmitted before the SL DRX inactivity timer expires. However, based on an embodiment of the present disclosure, the RX UE that receives a new SL packet with a low SL priority (i.e., large SL priority value) may start a SL DRX inactivity timer with a longer duration than a conventional SL DRX inactivity timer, which may allow the RX UE to monitor a PSCCH/PSSCH transmitted by the TX UE for a longer period of time.

In addition, if the RX UE that has received a PSCCH/PSSCH transmitted by the TX UE transmits SL HARQ NACK feedback, the RX UE may start the SL DRX HARQ RTT timer, and the RX UE may determine that the counterpart TX UE will not transmit a sidelink retransmission packet to the RX UE until the SL DRX HARQ RTT timer expires, and the RX UE may operate in sleep mode while the corresponding timer is running. If the SL DRX HARQ RTT timer expires, the RX UE may transition from sleep mode to active mode and monitor a retransmission packet (or PSSCH assignments) transmitted by the counterpart TX UE. In this case, if the TX UE drops SL data retransmission with a low priority (i.e., large priority value) due to a UL/SL prioritization procedure (e.g., determining the transmission priority between UL data and SL data) or SL/SL prioritization procedure (e.g., determining the transmission priority between SL data), there may be a delay in the SL data retransmission with the low priority. As a result, the SL data retransmission with the low priority may not occur before the SL DRX retransmission timer of the RX UE expires, or the SL data retransmission with the low priority may not be retransmitted before the SL DRX retransmission timer expires. However, based on an embodiment of the present disclosure, if the RX UE fails to decode a SL new packet with a low SL priority (i.e., large SL priority value) (e.g., in the case of NACK), the RX UE may start a SL DRX RTT timer with a longer duration than a conventional SL DRX RTT timer, which may allow the RX UE to monitor a PSCCH/PSSCH retransmitted by the TX UE for a longer period of time.

Based on an embodiment of the present disclosure, a duration of a SL DRX inactivity timer and a duration of a SL DRX retransmission timer mapped to a smaller SL priority value (e.g., higher priority service) may be configured to be longer. For example, compared to a duration of a SL DRX inactivity timer and a duration of a SL DRX retransmission timer mapped to a larger SL priority value (e.g., lower priority service), a duration of a SL DRX inactivity timer and a duration of a SL DRX retransmission timer mapped to a smaller SL priority value (e.g., higher priority service) may be configured to be longer. That is, the duration of the SL DRX inactivity timer and the duration of the SL DRX retransmission timer mapped to the SL priority value 1 may be configured to the longest value. The duration of the SL DRX inactivity timer and the duration of the SL DRX retransmission timer mapped to SL priority value 8 may be configured to the shortest value.

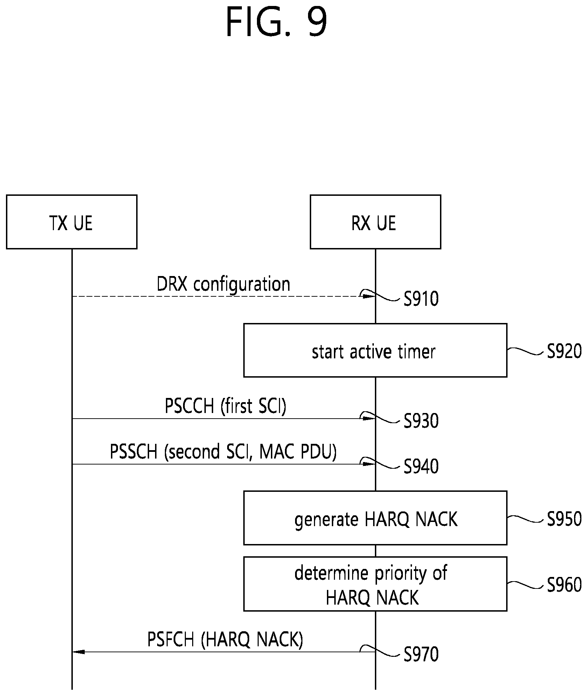

FIG. 9 shows a procedure for an RX UE to transmit prioritized HARQ feedback, based on an embodiment of the present disclosure. The embodiment of FIG. 9 may be combined with various embodiments of the present disclosure.

Referring to FIG. 9, in step S910, the RX UE may obtain a SL DRX configuration. For example, the RX UE may receive the SL DRX configuration from the TX UE. Alternatively, for example, the SL DRX configuration may be configured or pre-configured for the RX UE and the TX UE. For example, the SL DRX configuration may include information related to an active timer (e.g., an on-duration timer, a retransmission timer, an inactivity timer, etc.). For example, the SL DRX configuration may include information related to a SL DRX HARQ RTT timer.

In step S920, the RX UE may start the active timer. For example, while the active timer is running, the RX UE may be in an active state.

In step S930, the RX UE may receive, from the TX UE through a PSCCH, first SCI for scheduling of a PSSCH and second SCI.

In step S940, the RX UE may receive, from the TX UE through the PSSCH, the second SCI and data (e.g., MAC PDU).

For example, the TX UE may transmit the SCI (e.g., first SCI or second SCI) to the RX UE by including the packet delay budget (PDB) or remaining PDB of the PSSCH related to the SCI. For example, if the RX UE receives the SCI from the TX UE that includes information related to the PDB or the remaining PDB during the SL DRX active time (i.e., the time during which the RX UE operates in active mode to monitor a PSCCH/PSSCH), the RX UE may extend the active time to monitor a PSCCH/PSSCH transmitted by the TX UE until the PDB expires. Furthermore, when the TX UE includes information related to the PDB or the remaining PDB in the SCI transmitted by the TX UE to the RX UE, the TX UE may indicate a recommended wake up time for the RX UE to operate in SL active time (e.g., a recommendation of the time the RX UE should operate in active time considering the remaining PDB). That is, the TX UE may transmit information related to the recommended wake up time to the RX UE.

For example, if the RX UE's SL active time (e.g., SL DRX on-duration timer) is about to expire, or if there are few remaining PDB within the RX UE's SL active time (e.g., SL DRX on-duration timer) (i.e., if the remaining active time or the remaining PDB is less than or equal to a threshold), the RX UE receiving the PSCCH/PSSCH from the TX UE may fail to decode the PSCCH/PSSCH (e.g., SL HARQ NACK). In this case, in step S950, the RX UE may generate SL HARQ NACK. Then, in step S960, the RX UE may consider/determine that PSFCH transmission (e.g., SL HARQ NACK) has the highest priority, and in step S970, the RX UE may transmit the PSFCH (e.g., SL HARQ NACK) to the TX UE. Specifically, to ensure that the RX UE transmits the PSFCH to the TX UE before the PDB expires and that the RX UE successfully receives a PSSCH retransmitted by the TX UE, the RX UE may consider/determine that PSFCH transmission (e.g., SL HARQ NACK) has the highest priority. For example, if the RX UE's SL active time (e.g., SL DRX on-duration timer) is about to expire, or if there are few remaining PDB within the RX UE's SL active time (e.g., SL DRX on-duration timer) (i.e., if the remaining active time or the remaining PDB is less than or equal to a threshold), the RX UE receiving the PSCCH/PSSCH from the TX UE may fail to decode the PSCCH/PSSCH (e.g., SL HARQ NACK). In this case, the RX UE needs to transmit a PSFCH (e.g., SL HARQ NACK). If transmission with a higher priority (i.e., smaller SL priority value) (e.g., UL data transmission, another SL data transmission with a higher priority) than the PSFCH to be transmitted exists at the same time, the RX UE may consider/determine that PSFCH transmission (e.g., SL HARQ NACK) has the highest priority, and the RX UE may transmit the PSFCH (e.g., SL HARQ NACK) to the TX UE. For example, the RX UE may drop the UL data transmission or another SL data transmission with the higher priority.

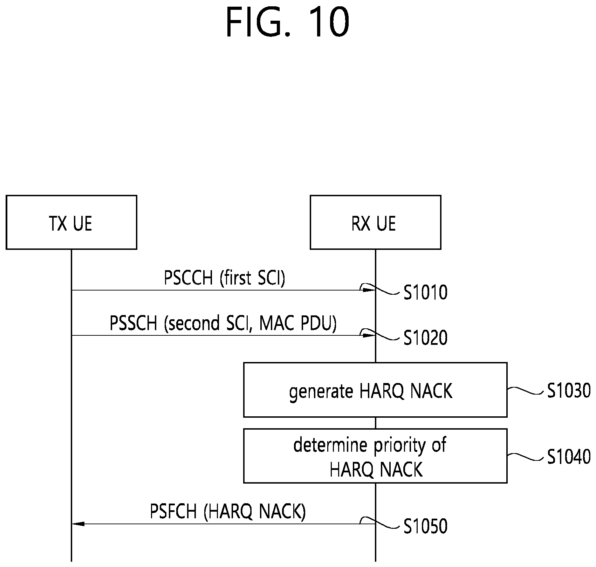

FIG. 10 shows a procedure for the RX UE to transmit prioritized HARQ feedback, based on an embodiment of the present disclosure. The embodiment of FIG. 10 may be combined with various embodiments of the present disclosure.

Referring to FIG. 10, in step S1010, the RX UE may receive, from the TX UE through a PSCCH, first SCI for scheduling of a PSSCH and second SCI.

In step S1020, the RX UE may receive, from the TX UE through the PSSCH, the second SCI and data (e.g., MAC PDU).

For example, the TX UE may transmit the SCI (e.g., first SCI or second SCI) to the RX UE by including the packet delay budget (PDB) or remaining PDB of the PSSCH related to the SCI. For example, if there are few remaining PDB (i.e., if the remaining active time or the remaining PDB is less than or equal to a threshold), the RX UE receiving the PSCCH/PSSCH from the TX UE may fail to decode the PSCCH/PSSCH (e.g., SL HARQ NACK). In this case, in step S1030, the RX UE may generate SL HARQ NACK. In addition, in step S1040, the RX UE may consider/determine that PSFCH transmission (e.g., SL HARQ NACK) has the highest priority, and in step S1050, the RX UE may transmit the PSFCH (e.g., SL HARQ NACK) to the TX UE. Specifically, to ensure that the RX UE transmits the PSFCH to the TX UE before the PDB expires and that the RX UE successfully receives a PSSCH retransmitted by the TX UE, the RX UE may consider/determine that PSFCH transmission (e.g., SL HARQ NACK) has the highest priority. For example, if there are few remaining PDB (i.e., if the remaining active time or the remaining PDB is less than or equal to a threshold), the RX UE receiving the PSCCH/PSSCH from the TX UE may fail to decode the PSCCH/PSSCH (e.g., SL HARQ NACK). In this case, the RX UE needs to transmit a PSFCH (e.g., SL HARQ NACK). If transmission with a higher priority (i.e., smaller SL priority value) (e.g., UL data transmission, another SL data transmission with a higher priority) than the PSFCH to be transmitted exists at the same time, the RX UE may consider/determine that PSFCH transmission (e.g., SL HARQ NACK) has the highest priority, and the RX UE may transmit the PSFCH (e.g., SL HARQ NACK) to the TX UE. For example, the RX UE may drop the UL data transmission or another SL data transmission with the higher priority.

Based on various embodiments of the present disclosure, if the remaining active time or the remaining PDB is less than or equal to the threshold, the UE may consider/determine that the priority of the PSFCH transmission is the highest priority. Referring again to FIG. 8, the TX UE may transmit a PSCCH and a PSSCH to the RX UE in slot #N. In the embodiment of FIG. 8, it is assumed that the retransmission resource related to the PSSCH transmitted in slot #N is allocated/reserved in slot #K, and the PSFCH resource related to the PSSCH transmitted in slot #N is allocated in slot #L. In addition, it is assumed that slot #K is within the remaining PDB or the remaining active time. In this case, if the RX UE fails to decode the PSSCH transmitted in slot #N, the RX UE may generate NACK information to be transmitted based on the PSFCH resource allocated in slot #L, and the RX UE may determine/consider the priority of the NACK information as the highest priority (i.e., priority value 1). In this way, the problem of PSFCH transmission being dropped in slot #L by the UL/SL prioritization procedure or the SL/SL prioritization procedure can be avoided as much as possible. Specifically, for example, if the cast type indicator included in the SCI format 2-A transmitted in slot #N is set to 11, and the HARQ feedback enabled/disabled indicator included in the SCI format 2-A transmitted in slot #N is set to HARQ feedback enabled, the RX UE that fails to decode data scheduled by the SCI format 2-A may generate NACK information, and the RX UE may determine/consider the priority of the NACK information as 1. For example, if the HARQ feedback enabled/disabled indicator included in the SCI format 2-B transmitted in slot #N is set to HARQ feedback enabled, the RX UE that fails to decode data scheduled by the SCI format 2-B may generate NACK information, and the RX UE may determine/consider the priority of the NACK information as 1. In this way, the problem of the PSFCH transmission being dropped in slot #L by the UL/SL prioritization procedure or the SL/SL prioritization procedure can be avoided as much as possible, so that the RX UE can receive a PSCCH and a PSSCH retransmitted by the TX UE in slot #K. In this way, the reliability of the SL communication between the RX UE and the TX UE can be ensured.

The proposal of the present disclosure is only applicable to SL HARQ Feedback Enabled mode. The proposal of the present disclosure is only applicable to SL HARQ Feedback Disabled mode. The proposal of the present disclosure is equally applicable to both SL HARQ Feedback Enabled mode and SL HARQ Feedback Disabled mode.

The proposal of the present disclosure can be applied/extended to/as a method of solving a problem in which loss occurs due to interruption which occurs during Uu BWP switching. In addition, in the case of a plurality of SL BWPs being supported for the UE, the proposal of the present disclosure can be applied/extended to/as a method of solving a problem in which loss occurs due to interruption which occurs during SL BWP switching.

The proposal of the present disclosure can be applied/extended to/as UE-pair specific SL DRX configuration(s), UE-pair specific SL DRX pattern(s) or parameter(s) (e.g., timer) included in UE-pair specific SL DRX configuration(s), as well as default/common SL DRX configuration(s), default/common SL DRX pattern(s), or parameter(s) (e.g., timer) included in default/common SL DRX configuration(s). In addition, the on-duration mentioned in the proposal of the present disclosure may be extended to or interpreted as an active time (e.g., time to wake-up state (e.g., RF module turned on) to receive/transmit radio signal(s)) duration, and the off-duration may be extended to or interpreted as a sleep time (e.g., time to sleep in sleep mode state (e.g., RF module turned off) to save power) duration. It does not mean that the TX UE is obligated to operate in the sleep mode in the sleep time duration. If necessary, the TX UE may be allowed to operate in an active time for a while for a sensing operation and/or a transmission operation, even if it is a sleep time.

For example, whether or not the (some) proposed method/rule of the present disclosure is applied and/or related parameter(s) (e.g., threshold value(s)) may be configured (differently or independently) for each resource pool. For example, whether or not the (some) proposed method/rule of the present disclosure is applied and/or related parameter(s) (e.g., threshold value(s)) may be configured (differently or independently) for each congestion level. For example, whether or not the (some) proposed method/rule of the present disclosure is applied and/or related parameter(s) (e.g., threshold value(s)) may be configured (differently or independently) for each service priority. For example, whether or not the (some) proposed method/rule of the present disclosure is applied and/or related parameter(s) (e.g., threshold value(s)) may be configured (differently or independently) for each service type. For example, whether or not the (some) proposed method/rule of the present disclosure is applied and/or related parameter(s) (e.g., threshold value(s)) may be configured (differently or independently) for each resource pool. For example, whether or not the (some) proposed method/rule of the present disclosure is applied and/or related parameter(s) (e.g., threshold value(s)) may be configured (differently or independently) for each QoS requirement (e.g., latency, reliability). For example, whether or not the (some) proposed method/rule of the present disclosure is applied and/or related parameter(s) (e.g., threshold value(s)) may be configured (differently or independently) for each PQI (5G QoS identifier (5QI) for PC5). For example, whether or not the (some) proposed method/rule of the present disclosure is applied and/or related parameter(s) (e.g., threshold value(s)) may be configured (differently or independently) for each traffic type (e.g., periodic generation or aperiodic generation). For example, whether or not the (some) proposed method/rule of the present disclosure is applied and/or related parameter(s) (e.g., threshold value(s)) may be configured (differently or independently) for each SL transmission resource allocation mode (e.g., mode 1 or mode 2).

For example, whether or not the proposed rule of the present disclosure is applied and/or related parameter configuration value(s) may be configured (differently or independently) for each resource pool. For example, whether or not the proposed rule of the present disclosure is applied and/or related parameter configuration value(s) may be configured (differently or independently) for each service/packet type. For example, whether or not the proposed rule of the present disclosure is applied and/or related parameter configuration value(s) may be configured (differently or independently) for each service/packet priority. For example, whether or not the proposed rule of the present disclosure is applied and/or related parameter configuration value(s) may be configured (differently or independently) for each QoS requirement (e.g., URLLC/EMBB traffic, reliability, latency). For example, whether or not the proposed rule of the present disclosure is applied and/or related parameter configuration value(s) may be configured (differently or independently) for each PQI. For example, whether or not the proposed rule of the present disclosure is applied and/or related parameter configuration value(s) may be configured (differently or independently) for each cast type (e.g., unicast, groupcast, broadcast). For example, whether or not the proposed rule of the present disclosure is applied and/or related parameter configuration value(s) may be configured (differently or independently) for each (resource pool) congestion level (e.g., CBR). For example, whether or not the proposed rule of the present disclosure is applied and/or related parameter configuration value(s) may be configured (differently or independently) for each SL HARQ feedback option (e.g., NACK-only feedback, ACK/NACK feedback). For example, whether or not the proposed rule of the present disclosure is applied and/or related parameter configuration value(s) may be configured specifically (or differently or independently) for HARQ Feedback Enabled MAC PDU transmission. For example, whether or not the proposed rule of the present disclosure is applied and/or related parameter configuration value(s) may be configured specifically (or differently or independently) for HARQ Feedback Disabled MAC PDU transmission. For example, whether or not the proposed rule of the present disclosure is applied and/or related parameter configuration value(s) may be configured specifically (or differently or independently) according to whether a PUCCH-based SL HARQ feedback reporting operation is configured or not. For example, whether or not the proposed rule of the present disclosure is applied and/or related parameter configuration value(s) may be configured specifically (or differently or independently) for pre-emption or pre-emption-based resource reselection. For example, whether or not the proposed rule of the present disclosure is applied and/or related parameter configuration value(s) may be configured specifically (or differently or independently) for re-evaluation or re-evaluation-based resource reselection. For example, whether or not the proposed rule of the present disclosure is applied and/or related parameter configuration value(s) may be configured (differently or independently) for each (L2 or L1) (source and/or destination) identifier. For example, whether or not the proposed rule of the present disclosure is applied and/or related parameter configuration value(s) may be configured (differently or independently) for each (L2 or L1) (a combination of source ID and destination ID) identifier. For example, whether or not the proposed rule of the present disclosure is applied and/or related parameter configuration value(s) may be configured (differently or independently) for each (L2 or L1) (a combination of a pair of source ID and destination ID and a cast type) identifier. For example, whether or not the proposed rule of the present disclosure is applied and/or related parameter configuration value(s) may be configured (differently or independently) for each direction of a pair of source layer ID and destination layer ID. For example, whether or not the proposed rule of the present disclosure is applied and/or related parameter configuration value(s) may be configured (differently or independently) for each PC5 RRC connection/link. For example, whether or not the proposed rule of the present disclosure is applied and/or related parameter configuration value(s) may be configured specifically (or differently or independently) for the case of performing SL DRX. For example, whether or not the proposed rule of the present disclosure is applied and/or related parameter configuration value(s) may be configured (differently or independently) for each SL mode type (e.g., resource allocation mode 1 or resource allocation mode 2). For example, whether or not the proposed rule of the present disclosure is applied and/or related parameter configuration value(s) may be configured specifically (or differently or independently) for the case of performing (a)periodic resource reservation.

The certain time mentioned in the proposal of the present disclosure may refer to a time during which a UE operates in an active time for a pre-defined time in order to receive sidelink signal(s) or sidelink data from a counterpart UE. The certain time mentioned in the proposal of the present disclosure may refer to a time during which a UE operates in an active time as long as a specific timer (e.g., sidelink DRX retransmission timer, sidelink DRX inactivity timer, or timer to ensure that an RX UE can operate in an active time in a DRX operation of the RX UE) is running in order to receive sidelink signal(s) or sidelink data from a counterpart UE. In addition, the proposal and whether or not the proposal rule of the present disclosure is applied (and/or related parameter configuration value(s)) may also be applied to a mmWave SL operation.

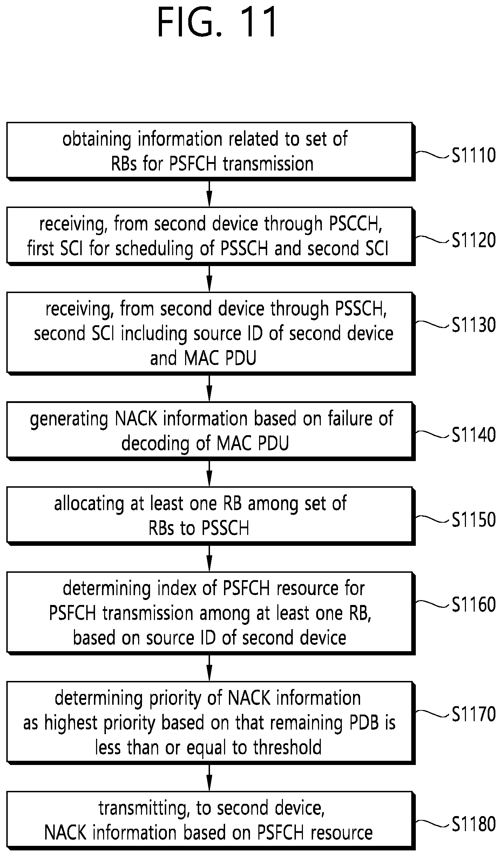

FIG. 11 shows a method for a first device to perform wireless communication, based on an embodiment of the present disclosure. The embodiment of FIG. 11 may be combined with various embodiments of the present disclosure.

Referring to FIG. 11, in step S1110, the first device may obtain information related to a set of resource blocks (RBs) for physical sidelink feedback channel (PSFCH) transmission. In step S1120, the first device may receive, from a second device through a physical sidelink control channel (PSCCH), first sidelink control information (SCI) for scheduling of a physical sidelink shared channel (PSSCH) and second SCI. In step S1130, the first device may receive, from the second device through the PSSCH, the second SCI including a source ID of the second device and a medium access control (MAC) protocol data unit (PDU). For example, the first SCI or the second SCI may include information related to a remaining PDB of the MAC PDU. In step S1140, the first device may generate negative acknowledgment (NACK) information based on a failure of decoding of the MAC PDU. In step S1150, the first device may allocate at least one RB among the set of RBs to the PSSCH. In step S1160, the first device may determine an index of a PSFCH resource for PSFCH transmission among the at least one RB, based on the source ID of the second device. In step S1170, the first device may determine a priority of the NACK information as a highest priority based on that the remaining PDB is less than or equal to a threshold. In step S1180, the first device may transmit, to the second device, the NACK information based on the PSFCH resource.

For example, a resource for retransmission of the MAC PDU may be included in a second slot within the remaining PDB from a first slot in which the MAC PDU is received. For example, information related to the resource for retransmission of the MAC PDU may be included in the first SCI.

Additionally, for example, the first device may obtain a sidelink (SL) discontinuous reception (DRX) configuration. Additionally, for example, the first device may start a timer for active time. For example, the first SCI, the second SCI, and the MAC PDU may be received while the timer for the active time is running.

For example, the first device may operate in an active state until the remaining PDB expires.

For example, the first SCI or the second SCI may include information related to a recommended active time. For example, the first device may operate in an active state during the recommended active time.

For example, a value of the timer for the active time may be determined based on priority information included in the first SCI. For example, the smaller the value of the priority information included in the first SCI, the smaller the value of the timer for the active time may be determined. For example, a mapping relationship between the priority information included in the first SCI and the value of the timer for the active time may be configured for the first device. For example, the timer for the active time may be a SL inactivity timer or a SL retransmission timer.

For example, based on that cast type information representing NACK only feedback is included in the second SCI, the first device may determine the priority of the NACK information transmitted on the PSFCH resource as the highest priority.

For example, based on that the second SCI is a SCI format that does not require ACK feedback, the first device may determine the priority of the NACK information transmitted on the PSFCH resource as the highest priority.

For example, based on that cast type information representing NACK only feedback is included in the second SCI, the first device may determine the priority of the NACK information transmitted on the PSFCH resource as the highest priority, regardless of the remaining PDB.

For example, based on that the second SCI is a SCI format that does not require ACK feedback, the first device may determine the priority of the NACK information transmitted on the PSFCH resource as the highest priority, regardless of the remaining PDB.

The proposed method may be applied to the device(s) based on various embodiments of the present disclosure. First, the processor 102 of the first device 100 may obtain information related to a set of resource blocks (RBs) for physical sidelink feedback channel (PSFCH) transmission. In addition, the processor 102 of the first device 100 may control the transceiver 106 to receive, from a second device through a physical sidelink control channel (PSCCH), first sidelink control information (SCI) for scheduling of a physical sidelink shared channel (PSSCH) and second SCI. In addition, the processor 102 of the first device 100 may control the transceiver 106 to receive, from the second device through the PSSCH, the second SCI including a source ID of the second device and a medium access control (MAC) protocol data unit (PDU). For example, the first SCI or the second SCI may include information related to a remaining PDB of the MAC PDU. In addition, the processor 102 of the first device 100 may generate negative acknowledgment (NACK) information based on a failure of decoding of the MAC PDU. In addition, the processor 102 of the first device 100 may allocate at least one RB among the set of RBs to the PSSCH. In addition, the processor 102 of the first device 100 may determine an index of a PSFCH resource for PSFCH transmission among the at least one RB, based on the source ID of the second device. In addition, the processor 102 of the first device 100 may determine a priority of the NACK information as a highest priority based on that the remaining PDB is less than or equal to a threshold. In addition, the processor 102 of the first device 100 may control the transceiver 106 to transmit, to the second device, the NACK information based on the PSFCH resource.

Based on an embodiment of the present disclosure, a first device adapted to perform wireless communication may be provided. For example, the first device may comprise: one or more memories storing instructions; one or more transceivers; and one or more processors connected to the one or more memories and the one or more transceivers. For example, the one or more processors may execute the instructions to: obtain information related to a set of resource blocks (RBs) for physical sidelink feedback channel (PSFCH) transmission; receive, from a second device through a physical sidelink control channel (PSCCH), first sidelink control information (SCI) for scheduling of a physical sidelink shared channel (PSSCH) and second SCI; receive, from the second device through the PSSCH, the second SCI including a source ID of the second device and a medium access control (MAC) protocol data unit (PDU), wherein the first SCI or the second SCI includes information related to a remaining PDB of the MAC PDU; generate negative acknowledgment (NACK) information based on a failure of decoding of the MAC PDU; allocate at least one RB among the set of RBs to the PSSCH; determine an index of a PSFCH resource for PSFCH transmission among the at least one RB, based on the source ID of the second device; determine a priority of the NACK information as a highest priority based on that the remaining PDB is less than or equal to a threshold; and transmit, to the second device, the NACK information based on the PSFCH resource.

Based on an embodiment of the present disclosure, an apparatus adapted to control a first user equipment (UE) may be provided. For example, the apparatus may comprise: one or more processors; and one or more memories operably connected to the one or more processors and storing instructions. For example, the one or more processors may execute the instructions to: obtain information related to a set of resource blocks (RBs) for physical sidelink feedback channel (PSFCH) transmission; receive, from a second UE through a physical sidelink control channel (PSCCH), first sidelink control information (SCI) for scheduling of a physical sidelink shared channel (PSSCH) and second SCI; receive, from the second UE through the PSSCH, the second SCI including a source ID of the second UE and a medium access control (MAC) protocol data unit (PDU), wherein the first SCI or the second SCI includes information related to a remaining PDB of the MAC PDU; generate negative acknowledgment (NACK) information based on a failure of decoding of the MAC PDU; allocate at least one RB among the set of RBs to the PSSCH; determine an index of a PSFCH resource for PSFCH transmission among the at least one RB, based on the source ID of the second UE; determine a priority of the NACK information as a highest priority based on that the remaining PDB is less than or equal to a threshold; and transmit, to the second UE, the NACK information based on the PSFCH resource.

Based on an embodiment of the present disclosure, a non-transitory computer-readable storage medium storing instructions may be provided. For example, the non-transitory computer-readable storage medium storing instructions, when executed, may cause a first device to: obtain information related to a set of resource blocks (RBs) for physical sidelink feedback channel (PSFCH) transmission; receive, from a second device through a physical sidelink control channel (PSCCH), first sidelink control information (SCI) for scheduling of a physical sidelink shared channel (PSSCH) and second SCI; receive, from the second device through the PSSCH, the second SCI including a source ID of the second device and a medium access control (MAC) protocol data unit (PDU), wherein the first SCI or the second SCI includes information related to a remaining PDB of the MAC PDU; generate negative acknowledgment (NACK) information based on a failure of decoding of the MAC PDU; allocate at least one RB among the set of RBs to the PSSCH; determine an index of a PSFCH resource for PSFCH transmission among the at least one RB, based on the source ID of the second device; determine a priority of the NACK information as a highest priority based on that the remaining PDB is less than or equal to a threshold; and transmit, to the second device, the NACK information based on the PSFCH resource.

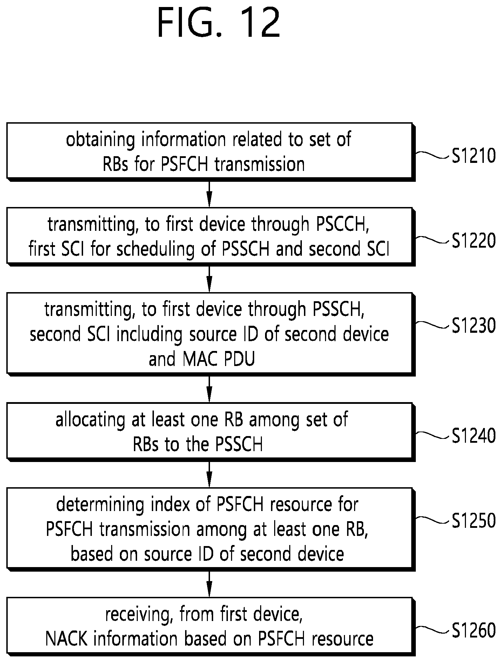

FIG. 12 shows a method for a second device to perform wireless communication, based on an embodiment of the present disclosure. The embodiment of FIG. 12 may be combined with various embodiments of the present disclosure.

Referring to FIG. 12, in step S1210, the second device may obtain information related to a set of resource blocks (RBs) for physical sidelink feedback channel (PSFCH) transmission. In step S1220, the second device may transmit, to a first device through a physical sidelink control channel (PSCCH), first sidelink control information (SCI) for scheduling of a physical sidelink shared channel (PSSCH) and second SCI. In step S1230, the second device may transmit, to the first device through the PSSCH, the second SCI including a source ID of the second device and a medium access control (MAC) protocol data unit (PDU). For example, the first SCI or the second SCI may include information related to a remaining PDB of the MAC PDU. In step S1240, the second device may allocate at least one RB among the set of RBs to the PSSCH. In step S1250, the second device may determine an index of a PSFCH resource for PSFCH transmission among the at least one RB, based on the source ID of the second device. In step S1260, the second device may receive, from the first device, negative acknowledgment (NACK) information based on the PSFCH resource. For example, based on that the remaining PDB is less than or equal to a threshold, a priority of the NACK information may be determined as a highest priority.

The proposed method may be applied to the device(s) based on various embodiments of the present disclosure. First, the processor 202 of the second device 200 may obtain information related to a set of resource blocks (RBs) for physical sidelink feedback channel (PSFCH) transmission. In addition, the processor 202 of the second device 200 may control the transceiver 206 to transmit, to a first device through a physical sidelink control channel (PSCCH), first sidelink control information (SCI) for scheduling of a physical sidelink shared channel (PSSCH) and second SCI. In addition, the processor 202 of the second device 200 may control the transceiver 206 to transmit, to the first device through the PSSCH, the second SCI including a source ID of the second device and a medium access control (MAC) protocol data unit (PDU). For example, the first SCI or the second SCI may include information related to a remaining PDB of the MAC PDU. In addition, the processor 202 of the second device 200 may allocate at least one RB among the set of RBs to the PSSCH. In addition, the processor 202 of the second device 200 may determine an index of a PSFCH resource for PSFCH transmission among the at least one RB, based on the source ID of the second device. In addition, the processor 202 of the second device 200 may control the transceiver 206 to receive, from the first device, negative acknowledgment (NACK) information based on the PSFCH resource. For example, based on that the remaining PDB is less than or equal to a threshold, a priority of the NACK information may be determined as a highest priority.

Based on an embodiment of the present disclosure, a second device adapted to perform wireless communication may be provided. For example, the second device may comprise: one or more memories storing instructions; one or more transceivers; and one or more processors connected to the one or more memories and the one or more transceivers. For example, the one or more processors may execute the instructions to: obtain information related to a set of resource blocks (RBs) for physical sidelink feedback channel (PSFCH) transmission; transmit, to a first device through a physical sidelink control channel (PSCCH), first sidelink control information (SCI) for scheduling of a physical sidelink shared channel (PSSCH) and second SCI; transmit, to the first device through the PSSCH, the second SCI including a source ID of the second device and a medium access control (MAC) protocol data unit (PDU), wherein the first SCI or the second SCI includes information related to a remaining PDB of the MAC PDU; allocate at least one RB among the set of RBs to the PSSCH; determine an index of a PSFCH resource for PSFCH transmission among the at least one RB, based on the source ID of the second device; and receive, from the first device, negative acknowledgment (NACK) information based on the PSFCH resource. For example, based on that the remaining PDB is less than or equal to a threshold, a priority of the NACK information may be determined as a highest priority.

Based on an embodiment of the present disclosure, an apparatus adapted to control a second user equipment (UE) may be provided. For example, the apparatus may comprise: one or more processors; and one or more memories operably connected to the one or more processors and storing instructions. For example, the one or more processors may execute the instructions to: obtain information related to a set of resource blocks (RBs) for physical sidelink feedback channel (PSFCH) transmission; transmit, to a first UE through a physical sidelink control channel (PSCCH), first sidelink control information (SCI) for scheduling of a physical sidelink shared channel (PSSCH) and second SCI; transmit, to the first UE through the PSSCH, the second SCI including a source ID of the second UE and a medium access control (MAC) protocol data unit (PDU), wherein the first SCI or the second SCI includes information related to a remaining PDB of the MAC PDU; allocate at least one RB among the set of RBs to the PSSCH; determine an index of a PSFCH resource for PSFCH transmission among the at least one RB, based on the source ID of the second UE; and receive, from the first UE, negative acknowledgment (NACK) information based on the PSFCH resource. For example, based on that the remaining PDB is less than or equal to a threshold, a priority of the NACK information may be determined as a highest priority.

Based on an embodiment of the present disclosure, a non-transitory computer-readable storage medium storing instructions may be provided. For example, the non-transitory computer-readable storage medium storing instructions, when executed, may cause a second device to: obtain information related to a set of resource blocks (RBs) for physical sidelink feedback channel (PSFCH) transmission; transmit, to a first device through a physical sidelink control channel (PSCCH), first sidelink control information (SCI) for scheduling of a physical sidelink shared channel (PSSCH) and second SCI; transmit, to the first device through the PSSCH, the second SCI including a source ID of the second device and a medium access control (MAC) protocol data unit (PDU), wherein the first SCI or the second SCI includes information related to a remaining PDB of the MAC PDU; allocate at least one RB among the set of RBs to the PSSCH; determine an index of a PSFCH resource for PSFCH transmission among the at least one RB, based on the source ID of the second device; and receive, from the first device, negative acknowledgment (NACK) information based on the PSFCH resource. For example, based on that the remaining PDB is less than or equal to a threshold, a priority of the NACK information may be determined as a highest priority.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

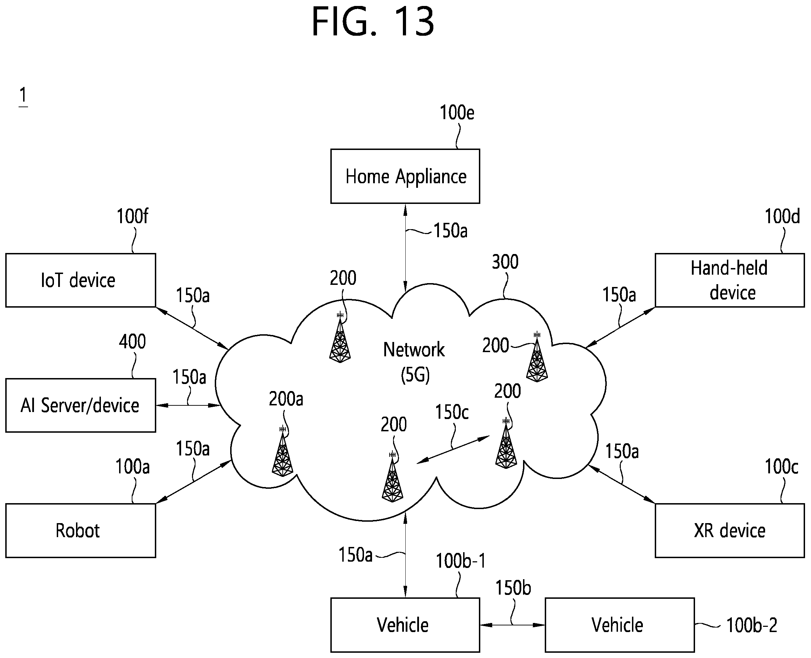

FIG. 13 shows a communication system 1, based on an embodiment of the present disclosure. The embodiment of FIG. 13 may be combined with various embodiments of the present disclosure.

Referring to FIG. 13, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

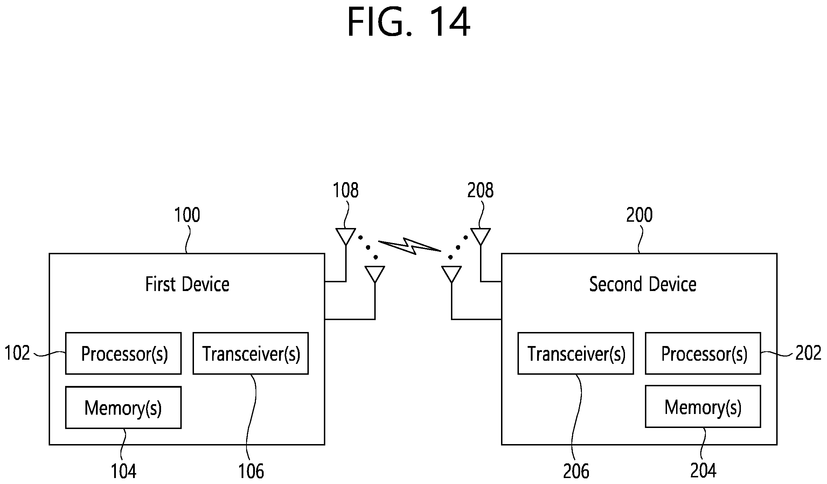

FIG. 14 shows wireless devices, based on an embodiment of the present disclosure. The embodiment of FIG. 14 may be combined with various embodiments of the present disclosure.

Referring to FIG. 14, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 13.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

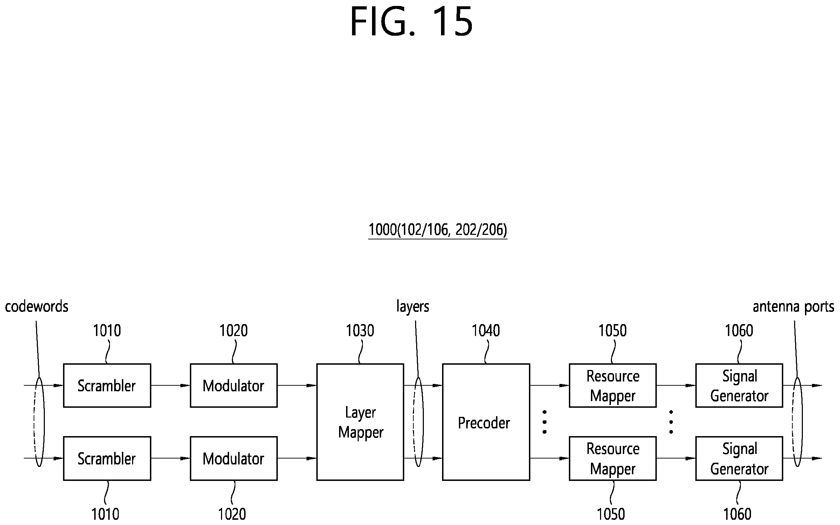

FIG. 15 shows a signal process circuit for a transmission signal, based on an embodiment of the present disclosure. The embodiment of FIG. 15 may be combined with various embodiments of the present disclosure.

Referring to FIG. 15, a signal processing circuit 1000 may include scramblers 1010, modulators 1020, a layer mapper 1030, a precoder 1040, resource mappers 1050, and signal generators 1060. An operation/function of FIG. 15 may be performed, without being limited to, the processors 102 and 202 and/or the transceivers 106 and 206 of FIG. 14. Hardware elements of FIG. 15 may be implemented by the processors 102 and 202 and/or the transceivers 106 and 206 of FIG. 14. For example, blocks 1010 to 1060 may be implemented by the processors 102 and 202 of FIG. 14. Alternatively, the blocks 1010 to 1050 may be implemented by the processors 102 and 202 of FIG. 14 and the block 1060 may be implemented by the transceivers 106 and 206 of FIG. 14.

Codewords may be converted into radio signals via the signal processing circuit 1000 of FIG. 15. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 15. For example, the wireless devices (e.g., 100 and 200 of FIG. 14) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

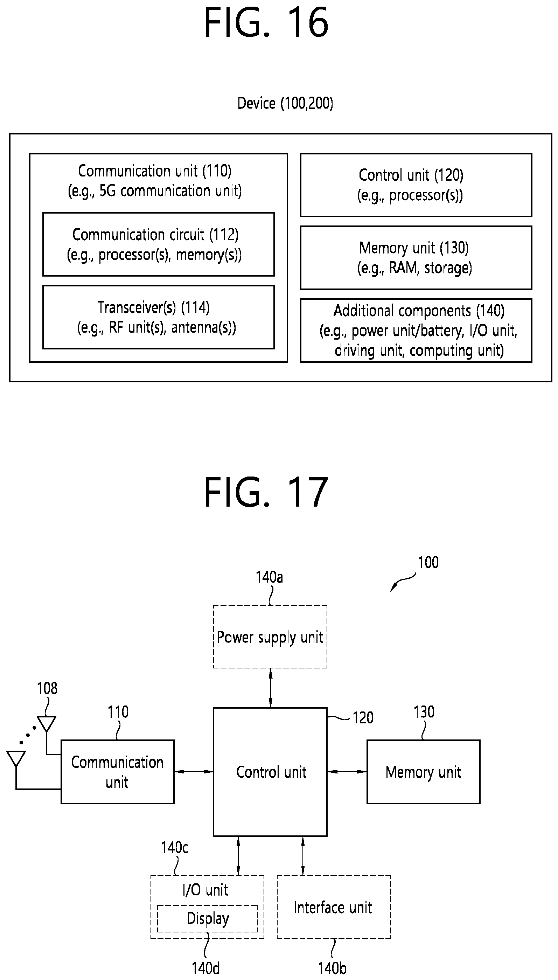

FIG. 16 shows another example of a wireless device, based on an embodiment of the present disclosure. The wireless device may be implemented in various forms according to a use-case/service (refer to FIG. 13). The embodiment of FIG. 16 may be combined with various embodiments of the present disclosure.

Referring to FIG. 16, wireless devices 100 and 200 may correspond to the wireless devices 100 and 200 of FIG. 14 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 14. For example, the transceiver(s) 114 may include the one or more transceivers 106 and 206 and/or the one or more antennas 108 and 208 of FIG. 14. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 13), the vehicles (100b-1 and 100b-2 of FIG. 13), the XR device (100c of FIG. 13), the hand-held device (100d of FIG. 13), the home appliance (100e of FIG. 13), the IoT device (100f of FIG. 13), a digital broadcast terminal, a hologram device, a public safety device, an MTC device, a medicine device, a fintech device (or a finance device), a security device, a climate/environment device, the AI server/device (400 of FIG. 13), the BSs (200 of FIG. 13), a network node, etc. The wireless device may be used in a mobile or fixed place according to a use-example/service.

In FIG. 16, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 16 will be described in detail with reference to the drawings.

FIG. 17 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 17 may be combined with various embodiments of the present disclosure.

Referring to FIG. 17, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 16, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

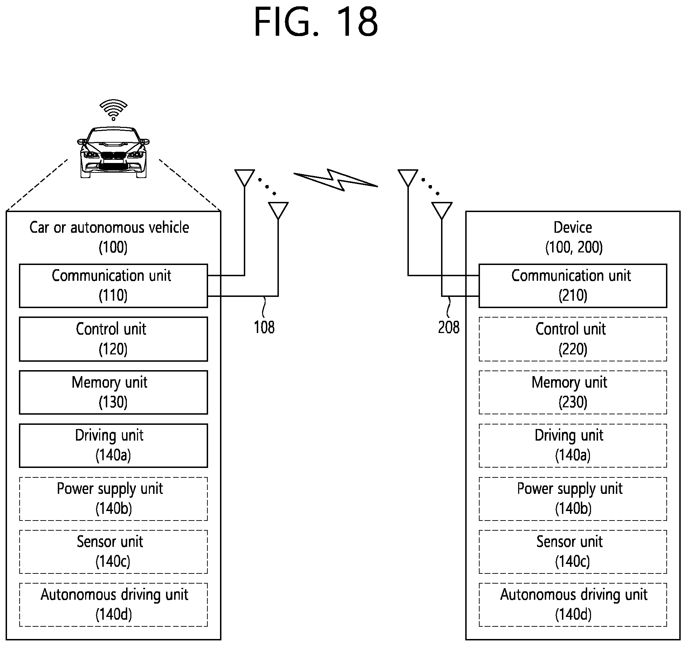

FIG. 18 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 18 may be combined with various embodiments of the present disclosure.

Referring to FIG. 18, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 16, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method, comprising:
obtaining (S1110), by a first device, information related to a set of resource blocks, RBs, for physical sidelink feedback channel, PSFCH, transmission;
receiving (S1120), by the first device, from a second device through a physical sidelink control channel, PSCCH, first sidelink control information, SCI, for scheduling of a physical sidelink shared channel, PSSCH, and second SCI;
receiving (S1130), by the first device, from the second device through the PSSCH, the second SCI including a source ID of the second device and a medium access control, MAC, protocol data unit, PDU, wherein the first SCI or the second SCI includes information related to a remaining PDB of the MAC PDU;
generating (S1140), by the first device, negative acknowledgment, NACK, information based on a failure of decoding of the MAC PDU;
allocating (S1150), by the first device, at least one RB among the set of RBs to the PSSCH;
determining (S1160), by the first device, an index of a PSFCH resource for PSFCH transmission among the at least one RB, based on the source ID of the second device;
determining (S1170), by the first device, a priority of the NACK information as a highest priority based on that the remaining PDB is less than or equal to a threshold; and
transmitting (S1180), by the first device, to the second device, the NACK information based on the PSFCH resource.

2. The method of claim 1, wherein a resource for retransmission of the MAC PDU is included in a second slot within the remaining PDB from a first slot in which the MAC PDU is received.

3. The method of claim 2, wherein information related to the resource for retransmission of the MAC PDU is included in the first SCI.

4. The method of claim 1, further comprising:
obtaining, by the first device, a sidelink, SL, discontinuous reception, DRX, configuration;
starting, by the first device, a timer for active time,
wherein the first SCI, the second SCI, and the MAC PDU are received while the timer for the active time is running.

5. The method of claim 4, wherein the first device operates in an active state until the remaining PDB expires.

6. The method of claim 4, wherein the first SCI or the second SCI includes information related to a recommended active time.

7. The method of claim 6, wherein the first device operates in an active state during the recommended active time.

8. The method of claim 4, wherein a value of the timer for the active time is determined based on priority information included in the first SCI.

9. The method of claim 8, wherein the smaller the value of the priority information included in the first SCI, the smaller the value of the timer for the active time is determined.

10. The method of claim 8, wherein a mapping relationship between the priority information included in the first SCI and the value of the timer for the active time is configured for the first device.

11. The method of claim 8, wherein the timer for the active time is a SL inactivity timer or a SL retransmission timer.

12. The method of claim 1, wherein, based on that cast type information representing NACK only feedback is included in the second SCI, the first device determines the priority of the NACK information transmitted on the PSFCH resource as the highest priority.

13. The method of claim 1, wherein, based on that the second SCI is a SCI format that does not require ACK feedback, the first device determines the priority of the NACK information transmitted on the PSFCH resource as the highest priority.

14. A first device (100), comprising:
at least one processor (102); and
at least one memory (104) connected to the at least one processor (102) and storing instructions that, based on being executed, cause the first device (100) to perform operations comprising:
obtaining information related to a set of resource blocks, RBs, for physical sidelink feedback channel, PSFCH, transmission;
receiving, from a second device through a physical sidelink control channel, PSCCH, first sidelink control information, SCI, for scheduling of a physical sidelink shared channel, PSSCH, and second SCI;
receiving, from the second device through the PSSCH, the second SCI including a source ID of the second device and a medium access control, MAC, protocol data unit, PDU, wherein the first SCI or the second SCI includes information related to a remaining PDB of the MAC PDU;
generating negative acknowledgment, NACK, information based on a failure of decoding of the MAC PDU;
allocating at least one RB among the set of RBs to the PSSCH;
determining an index of a PSFCH resource for PSFCH transmission among the at least one RB, based on the source ID of the second device;
determining a priority of the NACK information as a highest priority based on that the remaining PDB is less than or equal to a threshold; and
transmitting, to the second device, the NACK information based on the PSFCH resource.

15. The first device (100) of claim 14, wherein the operations further comprise operations of a method according to any of claims 2 to 13.

## Patentansprüche

1. Verfahren, umfassend:
Erhalten (S1110), durch eine erste Vorrichtung, von Informationen, die sich auf einen Satz von Ressourcenblöcken, RBs, für eine physikalische Sidelink-Feedback-Kanal-, PSFCH-, Übertragung beziehen;
Empfangen (S1120), durch die erste Vorrichtung, von einer zweiten Vorrichtung über einen physikalischen Sidelink-Steuerkanal, PSCCH, erster Sidelink-Steuerinformationen, SCI, zum Planen eines physikalischen Sidelink-Shared-Kanal, PSSCH, und zweiter SCI;
Empfangen (S1130), durch die erste Vorrichtung, der zweiten SCI, die eine Quellen-ID der zweiten Vorrichtung und eine Medienzugriffssteuerungs-, MAC-, Protokoll-Dateneinheit, PDU, enthält, von der zweiten Vorrichtung über den PSSCH, wobei die ersten SCI oder die zweiten SCI Informationen bezüglich einer verbleibenden PDB der MAC PDU enthalten;
Erzeugen (S1140), durch die erste Vorrichtung, von negativen Bestätigungs-, NACK-, Informationen auf der Grundlage eines Fehlers bei der Decodierung der MAC PDU;
Zuweisen (S1150), durch die erste Vorrichtung, mindestens eines RB aus dem Satz von RBs zum PSSCH;
Bestimmen (S1160), durch die erste Vorrichtung, eines Index einer PSFCH-Ressource für eine PSFCH-Übertragung unter der mindestens einen RB, auf der Grundlage der Quellen-ID der zweiten Vorrichtung;
Bestimmen (S1170), durch die erste Vorrichtung, einer Priorität der NACK-Informationen als höchste Priorität auf der Grundlage, dass die verbleibende PDB kleiner oder gleich einem Schwellenwert ist; und
Übertragen (S1180), durch die erste Vorrichtung, der NACK-Informationen an die zweite Vorrichtung auf der Grundlage der PSFCH-Ressource.

2. Verfahren nach Anspruch 1, wobei eine Ressource für eine erneute Übertragung der MAC PDU in einem zweiten Schlitz innerhalb der verbleibenden PDB aus einem ersten Schlitz, in dem die MAC PDU empfangen wird, enthalten ist.

3. Verfahren nach Anspruch 2, wobei Informationen bezüglich der Ressource für die erneute Übertragung der MAC PDU in den ersten SCI enthalten sind.

4. Verfahren nach Anspruch 1, ferner umfassend:
Erhalten, durch die erste Vorrichtung, einer Sidelink-, SL-, Diskontinuierlichen Empfangs-, DRX-, Konfiguration;
Starten, durch die erste Vorrichtung, eines Timers für eine aktive Zeit,
wobei die ersten SCI, die zweiten SCI und die MAC PDU empfangen werden, während der Timer für die aktive Zeit läuft.

5. Verfahren nach Anspruch 4, wobei die erste Vorrichtung in einem aktiven Zustand arbeitet, bis die verbleibende PDB abläuft.

6. Verfahren nach Anspruch 4, wobei die ersten SCI oder die zweiten SCI Informationen enthalten, die sich auf eine empfohlene aktive Zeit beziehen.

7. Verfahren nach Anspruch 6, wobei die erste Vorrichtung während der empfohlenen aktiven Zeit in einem aktiven Zustand arbeitet.

8. Verfahren nach Anspruch 4, wobei ein Wert des Timers für die aktive Zeit auf der Grundlage von Prioritätsinformationen bestimmt wird, die in den ersten SCI enthalten sind.

9. Verfahren nach Anspruch 8, wobei der Wert des Timers für die aktive Zeit umso kleiner bestimmt wird, je kleiner der Wert der in den ersten SCI enthaltenen Prioritätsinformation ist.

10. Verfahren nach Anspruch 8, wobei eine Zuordnungsbeziehung zwischen den in den ersten SCI enthaltenen Prioritätsinformationen und dem Wert des Timers für die aktive Zeit für die erste Vorrichtung konfiguriert ist.

11. Verfahren nach Anspruch 8, wobei der Timer für die aktive Zeit ein SL-Inaktivitätstimer oder ein SL-Wiederübertragungstimer ist.

12. Verfahren nach Anspruch 1, wobei die erste Vorrichtung auf der Grundlage, dass die zweiten SCI nur NACK-Feedback darstellende Cast-Typ-Informationen enthält, die Priorität der auf der PSFCH-Ressource übertragenen NACK-Informationen als höchste Priorität festlegt.

13. Verfahren nach Anspruch 1, wobei die erste Vorrichtung auf der Grundlage, dass das zweiten SCI ein SCI-Format sind, das kein ACK-Feedback erfordert, die Priorität der auf der PSFCH-Ressource übertragenen NACK-Informationen als höchste Priorität festlegt.

14. Erste Vorrichtung (100), umfassend:
mindestens einen Prozessor (102); und
mindestens einen Speicher (104), der mit dem mindestens einen Prozessor (102) verbunden ist und Befehle speichert, die, wenn sie ausgeführt werden, die erste Vorrichtung (100) veranlassen, Vorgänge auszuführen, die Folgendes umfassen:
Erhalten von Informationen, die sich auf einen Satz von Ressourcenblöcken, RBs, für eine physikalische Sidelink-Feedback-Kanal-, PSFCH-, Übertragung beziehen;
Empfangen von einer zweiten Vorrichtung über einen physikalischen Sidelink-Steuerkanal, PSCCH, erster Sidelink-Steuerinformationen, SCI, zum Planen eines physikalischen Sidelink-Shared-Kanal, PSSCH, und zweiter SCI;
Empfangen der zweiten SCI, die eine Quellen-ID der zweiten Vorrichtung und eine Medienzugriffssteuerungs-, MAC-, Protokoll-Dateneinheit, PDU, enthält, von der zweiten Vorrichtung über den PSSCH, wobei die ersten SCI oder die zweiten SCI Informationen bezüglich einer verbleibenden PDB der MAC PDU enthalten;
Erzeugen von negativen Bestätigungs-, NACK-, Informationen auf der Grundlage eines Fehlers bei der Decodierung der MAC PDU;
Zuweisen mindestens eines RB aus dem Satz von RBs zum PSSCH;
Bestimmen eines Index einer PSFCH-Ressource für eine PSFCH-Übertragung unter der mindestens einen RB, auf der Grundlage der Quellen-ID der zweiten Vorrichtung;
Bestimmen einer Priorität der NACK-Informationen als höchste Priorität auf der Grundlage, dass die verbleibende PDB kleiner oder gleich einem Schwellenwert ist; und
Übertragen der NACK-Informationen an die zweite Vorrichtung auf der Grundlage der PSFCH-Ressource.

15. Erste Vorrichtung (100) nach Anspruch 14, wobei die Vorgänge ferner Vorgänge eines Verfahrens nach einem der Ansprüche 2 bis 13 umfassen.

## Revendications

1. Procédé, comprenant:
l'obtention (S1110), par un premier dispositif, d'informations relatives à un ensemble de blocs de ressources, RB, pour la transmission de canal physique de rétroaction de liaison latérale, PSFCH;
la réception (S1120), par le premier dispositif, en provenance d'un second dispositif, par l'intermédiaire d'un canal physique de commande de liaison latérale, PSCCH, de premières informations de commande de liaison latérale, SCI, pour ordonnancer un canal physique de liaison latérale partagé, PSSCH, et des secondes SCI; et
la réception (S1130), par le premier dispositif, en provenance du second dispositif par l'intermédiaire du PSSCH, des secondes SCI comprenant un identifiant source du second dispositif et une unité de données de protocole, PDU, de contrôle d'accès au support, MAC, les premières SCI ou les secondes SCI comprenant des informations relatives à un PDB restant de la MAC PDU;
la génération (S1140), par le premier dispositif, d'informations d'accusé de réception négatif, NACK, se basant sur un échec de décodage de la MAC PDU MAC;
l'attribution (S1150), par le premier dispositif, d'au moins un RB parmi l'ensemble des RB au PSSCH;
la détermination (S1160), par le premier dispositif, d'un index d'une ressource PSFCH pour la transmission PSFCH parmi l'au moins un RB, sur la base de l'identifiant source du second dispositif;
la détermination (S1170), par le premier dispositif, d'une priorité des informations NACK comme priorité la plus élevée étant donné que le PDB restant est inférieur ou égal à un seuil; et
la transmission (S1180), par le premier dispositif, au second dispositif, des informations NACK sur la base de la ressource PSFCH.

2. Procédé selon la revendication 1, dans lequel une ressource pour la retransmission de la MAC PDU est incluse dans un second intervalle au sein du PDB restant à partir d'un premier intervalle dans lequel est reçue la MAC PDU.

3. Procédé selon la revendication 2, dans lequel les informations relatives à la ressource pour la retransmission de la MAC PDU sont incluses dans les premières SCI.

4. Procédé selon la revendication 1, comprenant en outre:
l'obtention, par le premier dispositif, d'une configuration de réception discontinue, DRX, en liaison latérale, SL;
le lancement, par le premier dispositif, d'un temporisateur pour le temps d'activation,
dans lequel les premières SCI, les secondes SCI, et la MAC PDU sont reçues pendant le fonctionnement du temporisateur pour la durée d'activation.

5. Procédé selon la revendication 4, dans lequel le premier dispositif opère dans un état actif jusqu'à expiration du PDB.

6. Procédé selon la revendication 4, dans lequel les premières SCI ou les secondes SCI comprennent des informations relatives à une durée d'activation recommandée.

7. Procédé selon la revendication 6, dans lequel le premier dispositif opère dans un état actif pendant la durée d'activation recommandée.

8. Procédé selon la revendication 4, dans lequel une valeur du temporisateur pour la durée d'activation est déterminée sur la base des informations de priorité incluses dans les premières SCI.

9. Procédé selon la revendication 8, dans lequel plus la valeur des informations de priorité incluses dans les premières SCI est faible, plus la valeur du temporisateur pour le temps d'activation est faible.

10. Procédé selon la revendication 8, dans lequel une relation de mappage entre les informations de priorité incluses dans les premières SCI et la valeur du temporisateur pour le temps d'activation est configurée pour le premier dispositif.

11. Procédé selon la revendication 8, dans lequel le temporisateur pour le temps d'activation est un temporisateur d'inactivité SL ou un temporisateur de retransmission SL DRX.

12. Procédé selon la revendication 1, dans lequel, sur la base des informations de type de diffusion représentant uniquement le retour de NACK inclus dans les secondes SCI, le premier dispositif détermine la priorité des informations NACK transmises sur la ressource PSFCH comme étant la priorité la plus élevée.

13. Procédé selon la revendication 1, dans lequel, étant donné que les secondes SCI se présentent sous la forme d'un format SCI qui n'exige pas un retour ACK, le premier dispositif détermine la priorité des informations NACK transmises sur la ressource PSFCH comme étant la priorité la plus élevée.

14. Premier dispositif (100), comprenant:
au moins un processeur (102); et
au moins une mémoire (104) connectée à l'au moins un processeur (102) et stockant des instructions qui, lorsqu'elles sont exécutées, amènent le premier dispositif (100) à réaliser les opérations comprenant:
l'obtention d'informations relatives à un ensemble de blocs de ressources, RB, pour la transmission de canal physique de rétroaction de liaison latérale, PSFCH;
la réception en provenance d'un second dispositif, par l'intermédiaire d'un canal physique de commande de liaison latérale, PSCCH, de premières informations de commande de liaison latérale, SCI, pour ordonnancer un canal physique de liaison latérale partagé, PSSCH, et des secondes SCI;
la réception en provenance du second dispositif par l'intermédiaire du PSSCH, des secondes SCI comprenant un identifiant source du second dispositif et une unité de données de protocole, PDU, de contrôle d'accès au support, MAC, les premières SCI ou les secondes SCI comprenant des informations relatives à un PDB restant de la MAC PDU;
la génération d'informations d'accusé de réception négatif, NACK, se basant sur un échec de décodage de la MAC PDU MAC;
l'attribution d'au moins un RB parmi l'ensemble des RB au PSSCH;
la détermination d'un index d'une ressource PSFCH pour la transmission PSFCH parmi l'au moins un RB, sur la base de l'identifiant source du second dispositif;
la détermination d'une priorité des informations NACK comme priorité la plus élevée étant donné que le PDB restant est inférieur ou égal à un seuil; et
la transmission, au second dispositif, des informations NACK sur la base de la ressource PSFCH.

15. Premier dispositif (100) selon la revendication 14, dans lequel les opérations comprennent des opérations supplémentaires d'un procédé selon l'une quelconque des revendications 2 à 13.
